# EUROPEAN PATENT SPECIFICATION

(11) **EP 1 739 901 B1**
(45) Date of publication and mention of the grant of the patent: **18.07.2012**
(21) Application number: 06004770.1
(22) Date of filing: 08.03.2006
(51) Int. Cl.: H04L 12/56, H04L 29/06, H04L 29/12

(54) **Mobile IPv6 optimised reverse tunnelling for multi-homed terminals**
Optimiertes Rückanlegen eines Tunnels für paketgeschaltete Kommunikationssysteme
Tunnellisation inverse optimisée pour des systèmes de communication mobiles de commutation de paquets

(30) Priority: 30.06.2005 EP 05014239
(43) Date of publication of application: 03.01.2007
(73) Proprietor: Panasonic Corporation, Kadoma-shi Osaka 571-8501 (JP)
(72) Inventor: Weniger, Kilian, Dr., 63225 Langen (DE); Bachmann, Jens, 63225 Langen (DE)
(74) Representative: Grünecker, Kinkeldey, Stockmair & Schwanhäusser

(56) References cited:
- EP-A- 1 401 173
- WO-A-02/071718
- WO-A-2004/010668
- US-A1- 2003 093 553
- US-A1- 2003 228 868
- US-A1- 2004 236 937
- US-A1- 2005 055 576
- US-A1- 2005 088 994
- PERKINS C ET AL: "Route Optimization in Mobile IP. draft-ietf-mobileip-optim-09.txt" MOBILE IP WORKING GROUP, [Online] 15 February 2000 (2000-02-15), XP002151964

## Description

### BACKGROUND OF THE INVENTION

### 1. Field of the invention

The invention is related to mobile communications systems. More specifically, it relates to location privacy and route optimization for mobile communication based on the Mobile Internet Protocol (Mobile IP) or similar protocols.

### 2. Description of the Related Art

The invention is described for the example of the Mobile Internet protocol Version 6 (Mobile IPv6). It is, however, also applicable to other protocols defining equivalent entities corresponding to the described entities of the Mobile IP.

Mobile IPv6 currently defines two modes of operation: bi-directional tunnelling and route optimization. While the former mode requires all data packets to be routed over the home agent of the sending mobile node, the latter utilizes the direct path between mobile node and correspondent.

If a Mobile Node (MN) moves between subnets, it must change its IP address to a topologically correct one. The reason is the hierarchical routing structure of the Internet, i.e. the IP addresses do not only serve identification purposes, but also contain location information. However, since connections on higher layers such as TCP are defined with the IP addresses (and port) of the communicating nodes, the connection breaks if one of the nodes changes its IP address, e.g. due to movement.

Mobile IPv6 [D. Johnson, C. Perkins, J. Arkko, "Mobility Support in IPv6", IETF RFC 3775, June 2004] is a layer 3 mobility protocol that enables Mobile Nodes (MNs) to move between subnets in a transparent manner for higher layers, i.e. without breaking higher layer connections. To this end, a MN uses two IP addresses: a Care-of-Address (CoA) and a Home Address (HoA). The MN's higher layers use the HoA for communication with the Correspondent Node (CN). This address does not change and serves the purpose of identification of the MN. Topologically, it belongs to the Home Network (HN) of the MN. In contrast, the CoA changes on every movement resulting in a subnet change and is used as the locator for the routing infrastructure. Topologically, it belongs to the network the MN is currently visiting. One out of a set of Home Agents (HA) located on the home link maintains a mapping of the MN's CoA to MN's HoA and redirects incoming traffic for the MN to its current location. Fur the purpose of redundancy and load balancing, a set of HAs may be used instead of a single HA.

Mobile IPv6 currently defines two modes of operation: bi-directional tunnelling and route optimization. If bi-directional tunnelling is used, data packets sent by the CN and addressed to the HoA of the MN are intercepted by the HA in the home network and tunnelled to the CoA of the MN. Data packets sent by the MN are reverse tunnelled to the HA which decapsulates the packets and sends them to the CN. For this operation, only the HA must be informed about the CoA of the MN. Therefore, the MN sends Binding Update (BU) messages to the HA. These messages are sent over an IPsec security association and thus are authenticated. Since the CN is not aware of the CoA of the MN, it cannot derive the location of the MN and thus location privacy is provided. However, if the MN is far away from the home network and the CN is close to the MN, the communication path is unnecessarily long, resulting in inefficient routing and high packet delays.

Note that different types of location privacy can be distinguished. The one this invention aims at is hiding the MN's location (and thus CoA) to the CN. Other types are hiding the location to eavesdroppers or preventing tracking of the MN's location.

The route optimization mode can prevent the described inefficiency by using the direct path between CN and MN. Therefore, the MN sends BU messages to the CN, which then is able to directly tunnel packets to the MN (actually, a type 2 routing header is used instead of an IP-in-IP tunnel). Of course, the CN has to support Mobile IPv6 route optimization. To authenticate the BU message, the MN and the CN perform a so-called return routability procedure, which tests the reachability of the MN at the HoA and CoA and generates a shared session key. However, since the CN learns the CoA of the MN by means of the BU message, it can derive its location, i.e. location privacy is not provided.

A mechanism that provides both location privacy and route optimization is certainly desirable, since interactive applications such as VolP require short packet delays.

Various approaches can be used to achieve this goal, some of them designed for other purposes. However, all of them introduce new infrastructure components (or require changes to existing components) in the visited networks. If the current visited network does not provide such components, location privacy and route optimization is not available, meaning that privacy-protected interactive communication may not be possible. A global deployment of such new components, i.e. in each access network, may take long time or may even never be accomplished. Other solutions only provide location privacy in one direction, i.e. location information is revealed only to at least one of the nodes if both communication partners are mobile. Some other solutions have scalability issues when deployed in large scale. A solution is desired that does not require the introduction of new or modified components in the visited network, works also when both communication partners are mobile and does scale well with respect to deployment. This invention describes such a solution.

Approaches that introduce new infrastructure components are Hierarchical Mobile IPv6 (HMIP), Access Router Encapsulation Caches (AREC), Optimized Route Caches (ORC), Global Home Agent to Home Agent Protocol (GlobalHAHA), WO03041358, WO2004010668 and US2005041675. These approaches are briefly described in the following.

HMIP [Hesham Soliman, Claude Catelluccia, Karim El Malki, Ludovic Bellier, "Hierarchical Mobile IPv6 mobility management (HMIPv6)", IETF Internet Draft draft-ietf-mipshop-hmipv6-04.txt, December 2004] was developed to reduce the latency and signalling overhead occurring due to BU messages sent to a HA (potentially being far away). Therefore, a local mobility handling is proposed by introducing a hierarchy of Mobility Anchor Points (MAP) in the visited network. The MN only needs to register its CoA with the local MAP. An additional CoA, the so-called Regional CoA (RCoA), is obtained from the MAP's subnet and used by the MAP to hide the MN's mobility within the MAP's region from the HA (or the CN in case of route optimization). Since the HA or the CN still knows the RCoA, full location privacy support is not given. However, because the geographical region that can be derived from the RCoA is larger than the region that can be derived from the actual CoA, this can be regarded as limited location privacy support.

AREC [WO2004055993] [G. Krishnamurthi, H. Chaskar, R. Siren, "Providing End-to-End Location Privacy in IP-based Mobile Communication", IEEE WCNC, March 2004] requires modifications in every Access Router (AR) of every visited network. Assuming that binding information is provided to the current ARs of the CN and MN, respectively, data packets can be tunnelled between both ARs without involvement of an HA, the CN or the MN. This way, the direct, i.e. shortest, route between MN and CN is used and location privacy is supported. A very similar approach is presented in WO2004010668.

ORC [Ryuji Wakikawa, "Optimized Route Cache Protocol (ORC)", Internet Draft draft-wakikawa-nemo-orc-01.txt, October 2004] was developed for route optimization in mobile networks (NEMO) and requires modifications to edge routers of visited networks, including the provision of binding information. The MN tunnels data packets to the edge router of the CN's current network (assuming that the CN is mobile) and the CN can tunnel data packets to the edge router of the MN's current visited network. To be able to tunnel the packets to the edge routers, each node needs to know the IP address of the correspondent edge router, which again reveals location information about the correspondent MN.

GlobalHAHA [P. Thubert, R. Wakikawa, V. Devarapalli, "Global HA to HA protocol", IETF Internet Draft draft-thubert-nemo-global-haha-00, October 2004] distributes HAs in the Internet that are usually bound to the home link by letting multiple HAs advertise routes to the home network prefix from different topological locations. A MN can bind to the closest HA, which serves as proxy HA, resulting in an optimized route. Location privacy is given if bi-directional tunnelling is used. However, if every visited network advertise routes to all other networks (all being home networks for some MNs), routing scalability issues may arise, since the address hierarchy is not given anymore. Also, the distributed home network must manually be configured as such. An secure on-demand configuration is not supported.

In WO03041358 so-called Location Privacy Agents (LPA) and Location Privacy Servers (LPS) are introduced in every network. The MN sends a location privacy request message to its LPA, which then selects an LPA that is close to the CN. The address of this LPA is then given to the MN, which then sends a BU message to this LPA. Hence, the approach is similar to the ORC approach: since the LPA is close to CN's network, it knows the location of CN to some extend, which breaks location privacy support if the CN is mobile.

In US2005041675 and WO2004043010 location privacy is achieved by cryptographically modified prefixes of IP addresses. Since the prefix is usually used by a router to route IP packets, this approach requires the modification of all routers in the Internet.

In WO03044626, multicast addresses are used as CoA. Since they do not include any location information, location privacy support is given even in route optimization mode. However, this solution does not scale with the number of MNs, since a large-scale deployment would result in a flat routing in the Internet.

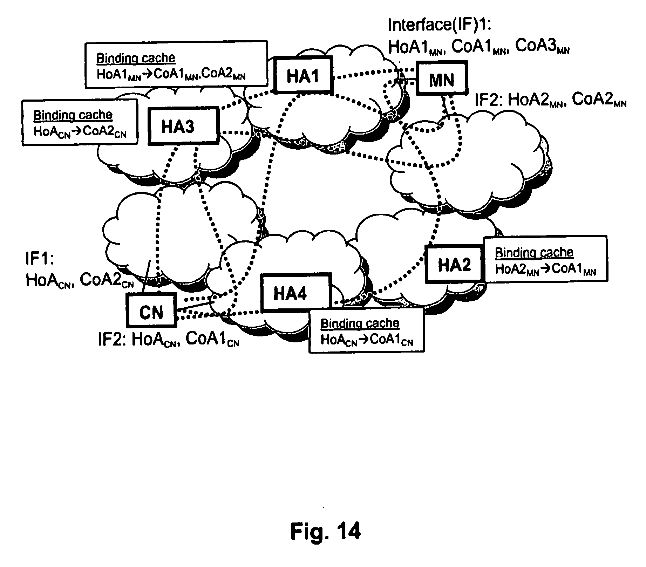

If the MN is multi-homed, it can have multiple network interfaces, HoAs, HAs and CoAs. Multiple paths over different network interfaces may exist between MN and CN (see Figure 14). For optimal system performance, the best of all available interfaces and paths should be selected and used for the route optimized communication. The "best path" may, e.g., be the shortest path or the one with the lowest delay. The selection and setup of this path is the main problem to be solved. Since there is no single central entity deciding about the path to be used (MN and CN may be registered in different administrative domains, which may, e.g., have different roaming agreements), this must be accomplished in a distributed manner.

Finding the best out of multiple paths between two nodes in a network can be regarded as the classical problem in networking. Distributed routing protocols such as RIP (Routing Information Protocol) or OSPF (Open Shortest Path First) are used to find the shortest path within a domain in the Internet. However, those protocols cannot be applied to the system under investigation due to several reasons:
- The network is an overlay network, where the network nodes are Mobile IPv6 HAs and the hosts are multi-homed Mobile IPv6 MNs,
- the links are multi-hop (i.e., overlay) links,
- the link costs are partly unknown,
- the CNs and MNs must not know the distance to and (topologically correct) addresses of other MNs to preserve location privacy, and
- the solution shall be efficient and compatible with ORT and Mobile IPv6 protocol. This implies that only small changes should be made to these protocols.

Another issue to consider is that home links can be distributed, i.e., multiple HAs on different links manage bindings for the same multi-homed host, with the binding having the same HoA but different CoAs. Although this is not supported by Mobile IPv6 [MIPv6], extensions like [HAHA] exist which support this case.

WO 02/071718 A2 describes a system for route optimized communication. The idea is that a CN queries a location server (home AR) for the current location of the MN. The CN then sends packets directly to the current AR of the MN. However, since the CN learns the location of the MN, location privacy is not provided, In another embodiment, the operation with NATs is described.

US 2004/0236937 A1 solves the problem of hiding a MN's location from third parties performing traffic monitoring between MN and CN.

It is proposed that the Home Address is substituted with privacy label in Binding Update (BU) messages and the IP header of data packets (in the type 2 routing header and the HoA option). The privacy label is cryptographically computed from the Home Address in a way that only MN and CN can derive the HoA from the privacy label. Hence, eavesdroppers cannot identify MN's HoA in the traffic sent between MN and CN anymore and hence cannot find out MN's location. In another embodiment, replay attacks are prevented by including the BU sequence number in the privacy label computation.

WO 2004/010668 A1 describes routing methods, which enable simultaneous location privacy and route optimization. GPRS is specifically noted as underlying mobility management protocol; Mobile IPv4 and Mobile IPv6 are mentioned as well.

The core idea of this invention is to skip at least one mobility agent on the path between a source node and a destination node in order to shorten the route. The source or destination node may request route optimization from one of the mobility agents. Different possibilities are listed, when route optimization can be triggered.

US 2005/0055576 A1 proposes a method that allows a MN to authenticate a CN and to receive a higher-level identity of the CN in addition to the IP address. This enables the MN to decide whether it trusts this CN and whether it wants to reveal its location to this CN or not. Based on this decision it either uses Mobile IPv6 route optimization mode or Bi-directional tunnelling mode for the communication with CN, with the former providing short packet delay but no location privacy and the latter providing location privacy but potentially long packet delays.

EP 1 401 173 A1 describes a architecture and protocol for mobility management that allows optimized routing and location privacy. Each domain contains a location management server, which stores mappings of IP host to IP routing addresses, the former being the identity and the latter the locator of a mobile node. ARs are adapted to query the location management server of the destination upon reception of a data packet from the mobile node connected to this AR. After receiving the reply, the AR caches the routing address of the destination, replaces the destination's host address in the packet with the destination's routing address and forwards the packet. The destination AR converts the destination address in header of the packet back to the host address.

### SUMMARY OF THE INVENTION

It is an object of the invention to provide location privacy and route optimisation for packet switching protocols like Mobile IPv6 without requiring the introduction of new or modified infrastructure components in every visited network. The solution shall also work when both communication partners are mobile and shall scale well with respect to deployment, i.e. number of MNs using the solution. It shall also provide the same level of security as standard Mobile IPv6 and be applicable to multi-homed terminals.

These objects are solved by the subject matter of the independent claims. Advantageous embodiments of the invention are subject matters to the dependent claims.

### BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein
Fig. 1 shows the data path between MN and CN without proxy HAs in bi-directional tunnelling mode;
Fig. 2 depicts the data path with two uni-directional tunnelling proxy HAs located in the home networks (scenario a);
Fig. 3 illustrates the data path with one bi-directional tunnelling proxy HA located in the home network of the MN (scenario b);
Fig. 4 shows the same scenario as Fig. 1 with different distances between the entities;
Fig. 5 shows the data path with two unidirectional tunnelling proxy HAs located in the visited networks of MN and CN (scenario c);
Fig. 6 illustrates the data path with one common bi-directional tunnelling proxy HA located in the visited network of the MN (scenario d);
Fig. 7 depicts the data path with one common bi-directional tunnelling proxy HA located in a network between the visited networks of MN and CN (scenario e);
Fig. 8 shows the signalling flow for initial negotiation in scenario a)-e) in a HA-controlled variant;
Fig. 9 illustrates the signalling flow for initial negotiation in scenario a)-e) in a MN-controlled variant;
Fig. 10 depicts the signalling flow for tunnel switching in scenario a) and b), HA- and MN-controlled;
Fig. 11 shows the signalling flow for BU exchange and tunnel switching in scenario c)-e), HA-controlled;
Fig. 12 illustrates the signalling flow for BU exchange and tunnel switching in scenario c)-e), MN-controlled;
Fig. 13 depicts the structure of a network server which could be used as a HA;
Fig. 14 is an example scenario with a subset of possible data paths in case MN has multiple HoAs and CoAs and CN has multiple CoAs and a single HoA;
Fig. 15 shows a signalling flow for a multi-homed MN and CN in the HA-controlled variant (new parts of this invention are in italic);
Fig. 16 illustrates a signalling flow for multi-homed MN and CN in the MN-controlled variant (new parts of this invention are in italic);
Fig. 17 shows a signalling flow for requesting distance information reports from candidate proxy HAs;
Fig. 18 shows an example scenario with MN having two HoA with non-distributed home links and CN having single HoA and multiple CoAs with distributed home link (italic entries in Binding Cache are new entries); and
Figs. 19a), b) and c) show a flow-chart for the process of optimised reverse tunnelling for multi-homed terminals.

### DETAILED DESCRIPTION OF THE INVENTION

The illustrative embodiments of the present invention will be described with reference to the figure drawings, wherein like elements and structures are indicated by like reference numbers.

Optimized Reverse Tunnelling (ORT) first requires some initial signalling between MN or MN's HA and CN or CN's HA to negotiate privacy as well as route optimization requirements of MN and CN. Based on this and additional distance information, candidate scenarios and, subsequently, candidate proxy HAs are determined. After determining the route lengths over the individual candidate proxy HAs, it is decided whether and to which proxy HA(s) tunnels will be switched. Then, binding information is sent and tunnels are switched to the selected target proxy HA(s). Due to mobility, the route lengths are dynamic and the process must be repeated at certain instances in time.

In the following, the individual procedures are described, i.e. the negotiation of requirements and candidate scenarios, the discovery of candidate proxy HAs, the determination of target proxy HA(s) based on distance information/route lengths, the establishment of binding information in a target proxy HA in a secure manner, and the switching of tunnels. The procedures can be realized either in a MN-controlled or an HA-controlled manner. Finally, it is described how the route can be adapted in the presence of mobility.

It is assumed, that an HA is assigned to the CN, either because the CN is mobile or because the CN registers with an HA to support ORT even if it is at home. If this is not the case, ORT is rejected in the initial negotiation phase.

### Requirements and candidate scenario negotiation

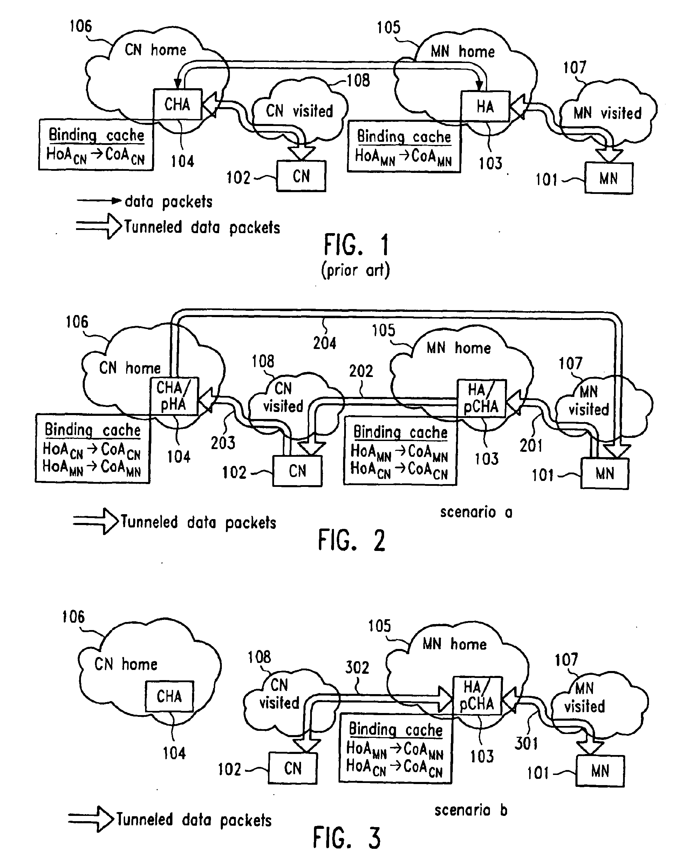

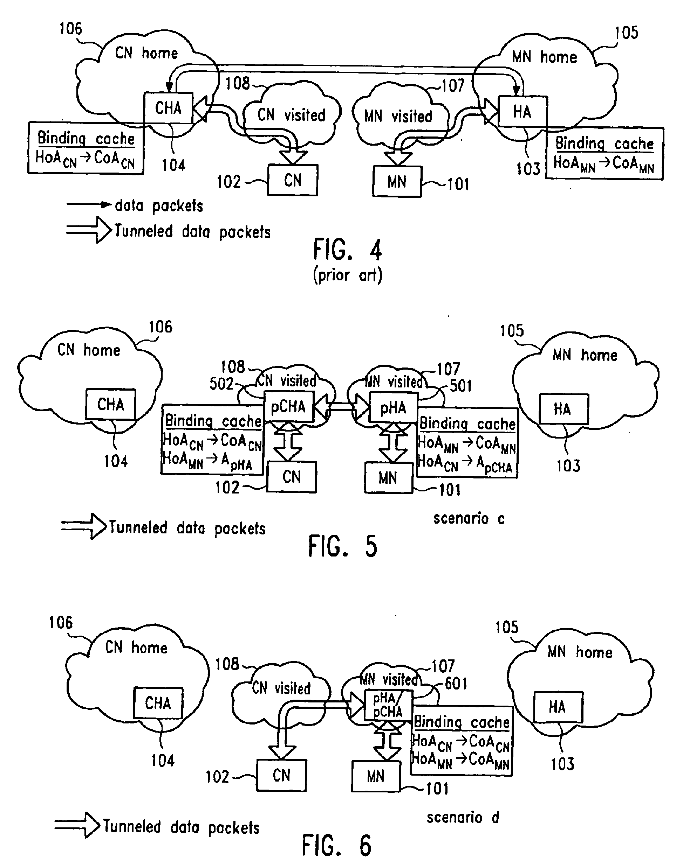

The starting scenario is always standard Mobile IP in bi-directional tunnelling mode. Figures 1 and 4 show the data path in this mode between the MN 101 and the CN 102 both being in foreign networks 107 and 108. The MN reverse tunnels all data packets addressed to CN's HoA to its HA 103, which decapsulates and forwards them. The routing infrastructure routes the packets to CN's home network 106, in which CN's HA (CHA) 104 intercepts and tunnels them to CN's CoA. Data packets in the other direction are handled accordingly.

Figures 1 and 4 show the same routing configuration for different distances between the respective networks. In Fig. 1, the MN's visited network 107 is closer to its home network 105 than the CN's visited network 108 to the CN's home network 106. In Fig. 4, both MN and CN are closer to each other than to their respective home network. It should further be noted that the visited network may in special cases be identical with the home network. If this is the case for one MN, this leads to a situation like shown in Fig. 1. If both MN and CN are in their respective home network, ORT may not provide a shorter routing than conventional mobile IP routing. However, for the purpose of location privacy, the overall routing procedure must be identical for all cases, at least from MN's and CN's point of view.

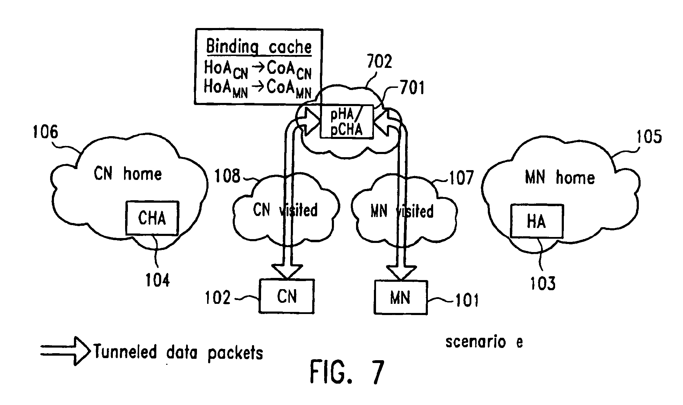

When MN or HA request ORT, the process starts with negotiating the route optimization and privacy requirements. The former can e.g. specify a maximum route length in hops, the latter can specifiy, if and what kind of privacy is required (hide MN's location to CN or to eavesdropper or prevent location tracking). Based on this information and additional distance information, CN's and MN's original HA select candidate scenarios for the route optimization. Not limiting the general concept to these scenarios, the following scenarios of different proxy HA locations are being discussed in the following:
a) Two unidirectional tunnelling proxy HAs 103 and 104 located in the home networks 105 and 106 of MN 101 and CN 102, respectively (see Figure 2).
b) One bidirectional tunnelling proxy HA 103 or 104 located in the home network 105 or 106 of MN 101 or CN 102, respectively (see Figure 3).
c) Two bidirectional tunnelling proxy HAs 501 and 502 located in the current visited networks 107 and 108 of the MN 101 and CN 102, respectively (see Figure 5).
d) One common bidirectional tunnelling proxy HA 601 in the current visited network 107 or 108 of the MN 101 or CN 102 (see Figure 6).
e) One common bidirectional tunnelling proxy HA 701 in a network 702 between the MN 101 and the CN 102 (see Figure 7).

Scenarios a) and b) can be most advantageously applied in distance situations like shown in Fig.1. In a situation like shown in Fig.4, scenarios c), d) and e) may lead to a shorter route.

An ordered list of candidate scenarios can be constructed based on distance information and other information. The following principles can be used to select a target scenario: Scenario a) and b) may not achieve an optimal route length if both MN and CN are far away from home. Scenario c) and d) can be considered if scenario a) and b) do not achieve the extent of route optimization desired. However, they can only be used if the visited networks support this solution. Scenario d) may only be used if one of the nodes (the one in whose network the common proxy is located) has no privacy requirements, since the other node knows the prefix of this network from tunnelled packets received. Scenario e) can be used if both visited networks do not support ORT and both MN and CN have privacy requirements. The difficulty however is to determine a network between the visited networks that is able to provide a proxy HA.

Note that scenario b), d) and e) may not achieve complete location privacy if MN and CN know that the respective scenario is currently active. E.g. in Figure 3, the CN 102 has some location information about the MN 101: CN knows that the path over the MN's HA 103 must be shorter than over the CN's HA 104 and it knows the distances to the MN's HA and the CN's HA. It can thus conclude whether the MN is closer to the MN's or to the CN's HA. As a countermeasure, either both the MN and the CN must not know which scenario is currently active or additional proxy HAs on the path must be used as intermediates.

Note that Mobility Anchor Points (MAP) in a network that supports HMIP can also co-locate a proxy HA.

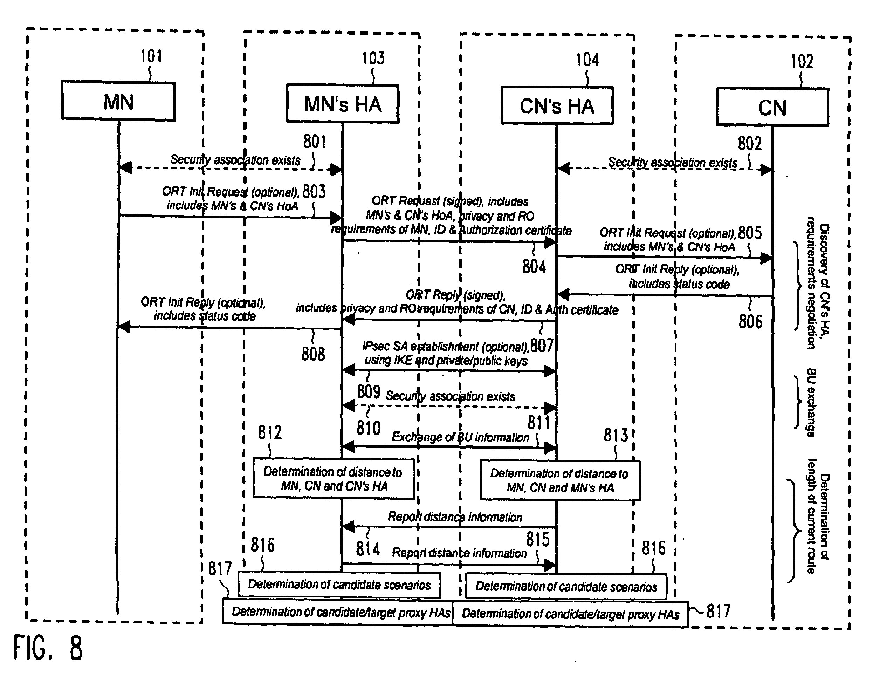

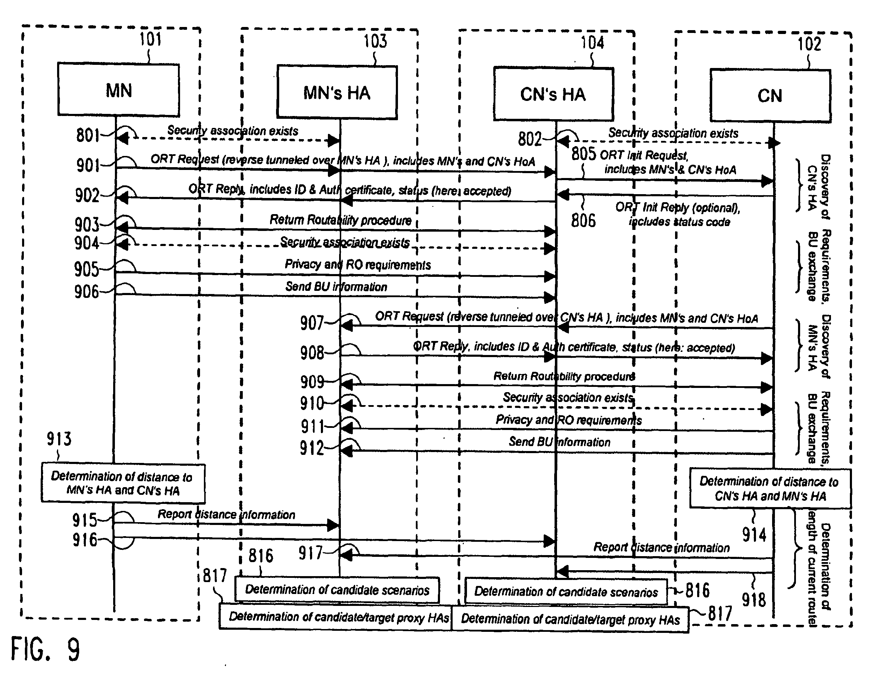

Examples of an initial negotiation in the HA- and MN-controlled variant are shown in Figure 8 and Figure 9, respectively.

In both cases security associations 801, 802 exist already between each mobile node and its HA.

In the HA controlled variant shown in Fig. 8, the MN 101 may optionally send an ORT initialisation request 803 to its HA. This request comprises the home addresses of MN and CN. The MN's HA 103 then sends a signed ORT request 804 to the CN's HA 104, comprising the home addresses of both mobile nodes together with privacy and route optimization (i.e. maximum route length) requirements of the MN, an identifier of the MN's HA, like IP address, and an authorization certificate to prove that it is authorized to act as HA in its network. Upon receiving this request, the CN's HA 104 may optionally send an ORT initialization request 805 to the CN 102 and receive an ORT initialization reply 806 including a status code back from CN102. The CN's HA 104 then sends back to the MN's HA 103 an ORT reply 807 to request 804. This reply is also signed and comprises privacy and route optimization requirements of the CN together with an identifier and an authorisation certificate of the CN's HA 104. In the case that the MN had sent ORT initialization request 803, it now receives a reply 808 thereto, including a status code, from its HA 103. If no security association 810 previously existed between both HAs 103 and 104, it is established in step 809 e.g. using Internet Key Exchange (IKE) and the private and public keys of both entities. Some kind of security association 110 is required for an integrity-protected exchange of binding update information between both HAs in step 811. This can also be achieved by signing the BU message directly with the public key of the correspondent. Next, each HA 103, 104 determines the distances to the respective other HA and to both the MN 101 and the CN 102 in steps 812 and 813 and reports the results to the respective other HA in steps 814 and 815. This information is used to determine the candidate scenarios in the HAs in step 816.

In the MN controlled variant shown in Fig. 9, ORT request 901, containing the home addresses of both mobile nodes, is mandatory. It is reverse tunnelled over the MN's HA to the CN's HA. The CN's HA 104 and the CN 102 may exchange an ORT initialization request 805 and optionally a reply thereto 806. In any case, the CN's HA 104 then returns to the MN101 a reply 902 to ORT request 901, including an identifier of the CN's HA 104, an authorization certificate and status information whether the request has been accepted. If it has been accepted, MN101 and CN's HA 104 carry out a return routability procedure 903. Thereafter, a security association 904 exists between MN 101 and the CN's HA 104. The MN sends privacy and route optimization requirements 905 and BU information 906 to the CN's HA. For the routing of data packets from the CN to the MN's HA steps 907-912 symmetric to steps 901-906 are performed. In the MN controlled case the MN 101 and the CN 102 determine the routing distances to both HAs 103, 104, respectively in steps 913 and 914 and report this information to both HAs in steps 915-918. This information is used to determine the candidate scenarios in the HAs in step 816.

### Discovery of candidate proxy HAs

After candidate scenarios have been determined, candidate proxy HAs are discovered. First, the prefix of these HAs must be known. In scenario a) and b), the prefixes can be derived from the MN's and CN's HoA and in scenario c) and d) they can be derived from the MN's and CN's CoA. In scenario e), the prefixes are more difficult to determine. One option is to trigger a traceroute procedure between an HA in the MN's and the CN's visited network in order to discover prefixes of intermediate networks. Another option is to configure a list of candidate proxy HA prefixes in each HA and try to find suitable candidates out of this list. Since this requires a significant amount of signalling and is likely to be unsuccessful, scenario e) should only be used if all other scenarios cannot be applied.

When the prefixes are known, the IP address of a specific candidate proxy HA must be determined. In the special case where the prefix matches the current visited network, the proxy HA can be discovered by local means, e.g. with information contained in Router Advertisement (RA) messages. Otherwise, DNS could be used, but this would require that all HA addresses and their prefixes are stored in the DNS. Currently, this is not the case. Another option is to use a modified version of Dynamic Home Agent Address Discovery (DHAAD) described in RFC 3775, which uses anycasting. Note that if multiple HAs exist on a link, the specific HA on the link must be found, which currently is the destination of a tunnel of a specific MN or CN. In scenario a) and b) this can e.g. be achieved by sending the Request message to CN's HoA and enabling CN's HA to intercept the Request.

### Selecting target proxy HA(s)

After candidate proxy HAs have been determined, specific target proxy HAs must be chosen. This can be done based on distance information, e.g. when changing from a scenario with two proxies to a scenario with one proxy, the one providing the shorter route is selected. Therefore, the distances MN↔pHA1, CN↔pHA1, MN↔pHA2 and CN↔pHA2 with pHA1 and pHA2 being candidate proxy HAs are measured by MN, CN and HAs. Distance can be expressed in number of hops, but could also be defined by other metrics like packet delay. The number of hops can passively be derived from the hop limit field in the IP header of signalling messages or tunnelled data packets or it can actively be measured by sending probe messages. The passive approach may require including the initial hop limit value, which was used by the sender, in the message, e.g. as new mobility option, since this value may be unknown to the receiver. Probe messages can be sent by the MN and/or by the HA. However, it must be considered that distances involving the CN should not be revealed to the MN, since this enables the MN to derive the CN's location to some extent. The MN's and the CN's (original) HAs collect all distance information and decide, which pHA provides the shorter route: if (MN↔pHA1) + (pHA1↔CN) < (MN↔pHA2) + (pHA2↔CN), pHA1 is better in terms of route optimization, otherwise pHA2 is better. Distance information can also be cached in HAs to save the signalling effort in future ORT sessions of other nodes.

An example of a signalling flow for collecting distance information is shown in initial negotiation flow in Figure 8 and Figure 9, and described above.

### Establishing binding information in a target proxy HA

Once the address of a target proxy HA is known, a Binding Update (BU) message can be sent to this address, by the MN in the MN-controlled variant or its HA in the HA-controlled variant. Note that after receiving the binding information, the proxy HA does not send proxy neighbour advertisements for the MN. The proxy functionality only refers to tunnelling on behalf the MN's original HA.

To send the binding information in a secure manner, various issues have to be considered. First, the injection of routes in an Internet router (here: proxy HA) by a malicious node must be prevented. Otherwise, this node can redirect traffic to another malicious node, e.g. to analyze or tamper the traffic and forward it back to the victim. An attacker could also redirect traffic to a victim that cannot handle the amount of traffic, e.g. because it has a low-bandwidth Internet connection.

To prevent that, the sender of the BU must authenticate at the proxy HA and, in case of the MN-controlled variant, it should prove that it really owns the claimed HoA. Additional reachability tests can be conducted to check if the MN actually owns the claimed CoA. Authentication and sender address ownership proof can be achieved with public/private keys and ID certificates: The ID certificate binds the public key to the sender address and the BU is signed with the private key. An alternative to ID certificates are Cryptographically Generated Addresses (CGA) [Aura, T., "Cryptographically Generated Addresses (CGA)", Internet-Draft draft-ietf-send-cga-06, April 2004], which bind the public key to the sender address. CGA only authenticates the interface identifier of the HoA, so that an additional reachability test should be conducted to prove that the prefix of the address is correct. Because key and certificate allocation requires considerable management effort, which grows with the number of allocations, this approach should only be applied to the HA-controlled variant. In this case, keys and certificates only need to be allocated to HAs, not to all MNs.

For the MN-controlled variant, CoA and HoA check and authentication of BU messages can be achieved by utilizing the return routability procedure used in route optimization mode described in RFC 3775. However, it is well-known that the return routability procedure in RFC 3775 is not resistant against attackers who are able to eavesdrop on both MN-CN and MN-HA-CN path. In RFC 3775, the path between MN and HA is protected by an IPSec SA. Thus, only the path between HA and CN is critical. Furthermore, attackers are usually on the edge of the network, because the routing infrastructure is well secured by the network operator. Thus the critical point for attacks is the point of attachment of the CN. This problem would especially be an issue in this invention, since routes are not only injected in a host (e.g. CN), but in Internet routers (here: proxy HA), which gives more options to an attacker. Fortunately, in contrast to RFC 3775, the procedure in this invention does not take place between the MN and the CN, but between the MN and the proxy HA, which is usually located within the network or routing infrastructure. Thus, the return routability procedure targeted at the proxy HA (as done in this invention) is considered more secure than targeted at the CN (as done in RFC 3775).

Another issue is that it should not be possible for a MN to successfully pretend to be a proxy HA in order to find out another MN's CoA (and thus its location). For this reason, the receiver of the BU message must prove to be a valid (proxy) HA of a network operator. This can be achieved with authorization certificates issued by the network operator. Such certificates are also used in [J. Arkko, J. Kempf, B. Sommerfeld, B. Zill, P. Nikander, "SEcure Neighbor Discovery (SEND)", IETF Internet Draft draft-ietf-send-ndopt-06, July 2004] or [M. Liebsch, A. Singh, H. Chaskar, D. Funato, E. Shim, "Candidate Access Router Discovery", IETF Internet Draft draft-ietf-seamoby-card-protocol-08.txt, September 2004]. Two certificates, an authorization and an ID certificate, can authorize the HA to serve as an HA for the network operator and bind a public key to the HA address. The public key can be used to initialize an IPsec security association between HAs for securing the BU information exchange in the HA-controlled variant. Instead of establishing an IPsec security association, signalling messages can also be signed directly with the private keys.

All these messages can be protected against replay attacks by adding nonces and/or timestamps to ORT request/reply messages. Resource exhaustion DoS attacks are another security issue. To prevent memory exhaustion, no state should be established in the HAs before the initiator of ORT has proven to be authentic. In the HA-controlled variant, the ORT request is signed and contains certificates which can provide this proof. In the MN-controlled variant, the ORT request does not establish states in the HA. State is only established after the return routability procedure, which provides this proof. However, the verification of certificates and public key signatures requires significant CPU resources, which could be exploited for a CPU exhaustions attack. This attack only affects HAs in the HA-controlled variant, since in the MN-controlled variant the MN only has to verify a certificate after sending a Request message. A countermeasure could be to first check on receipt of an ORT Request whether the target address is really the address of an CN managed by the receiving HA. If this is not the case, the Request can be denied without checking the certificate. This way, an attacker first needs have some knowledge about the victim's Binding Cache. ORT Reply messages should only be processed if a corresponding Request (indicated by Sequence Number) with valid certificate has been sent before. Another countermeasure is to set a limit on the amount of resources the receiver of ORT Request messages uses for verifications. This approach is also used as a countermeasure for a similar attack ("unnecessary binding updates attack") against the Mobile IPv6 Route Optimization mode (see Nikander, P., "Mobile IP version 6 Route Optimization Security Design Background," October 2004).

Reflection attacks with amplification are prevented by ensuring that replies/acknowledgements are always replied with a single packet of about the same or smaller size and are sent to the sender address of the request.

Note that any signalling message sent between the MN and the proxy HA, e.g. a BU message after movement, should be sent authenticated by using the security association established before. In the MN-controlled variant, the MN and proxy HA have a direct security association, whereas in the HA-controlled variant this is not the case. Thus, all signalling messages must go over the MN's original HA to the current proxy HA. Also, when a MN moves, it still sends the BUs to its original HA. In the HA-controlled variant, the original HA then forwards the BU to the proxy HA. In the MN-controlled variant, the MN itself sends BUs to both, its original and its proxy HA.

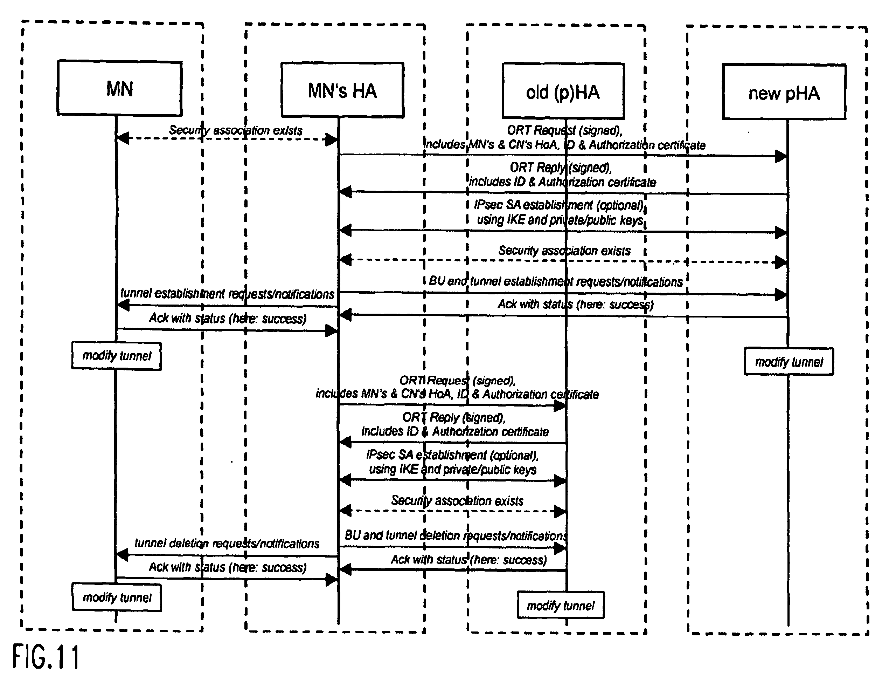

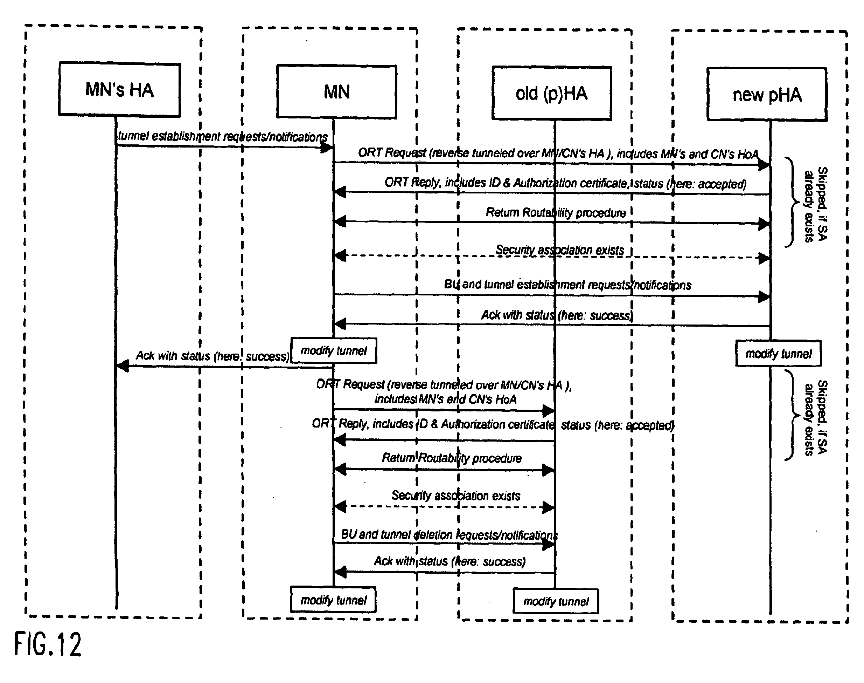

Examples of signalling flows for achieving scenario c)-e) in the HA- and MN-controlled variant, respectively, are shown in Figure 11 and Figure 12. If the target scenario is a) or b), binding information has already been sent to the proxy HAs during the initial negotiation.

### Switching tunnel endpoints to/from a target proxy HA

After the binding information is established in the target proxy HA, tunnel endpoints can be switched to this target proxy in order to optimize the path. An individual IP-in-IP tunnel is always unidirectional and therefore has an entry point or source and an exit point or destination. The establishment or deletion of an IP-in-IP tunnel usually only requires action on the entry point of the tunnel. However, the exit point should be informed, since it may compare the source of tunnelled packets with the expected tunnel entry point. The general mechanism for IPv6 tunnelling is specified in RFC 2473.

Two types of tunnel switches can be distinguished. Either
1) the source of a tunnel is moved from one proxy HA to another or
2) the destination of a tunnel is moved from one proxy HA to another.

A tunnel establishment request message is sent to the new source of the tunnel, a tunnel delete request message is sent to the current source of the tunnel. Furthermore, a tunnel switch notification message is sent to the destination of the new tunnel. All tunnel request messages contain the address of the corresponding end point of the tunnel. Usually, a proxy HA is the source of a tunnel of one node and a destination of a tunnel of the other node. If possible, the messages can be aggregated with other messages. Every switch of a tunnel (e.g. MN-pHA) should be synchronized with the switch of the tunnel of the corresponding node (e.g. pHA-CN), in order to prevent packet loss on the entire MN-CN path. Therefore, every request/notification message must be replied with an acknowledge message which contains a status code. This status code may only indicate a successful tunnel establishment, if both incoming and outgoing tunnels of the proxy HA are set up. Furthermore, MN and CN should not switch their outgoing tunnel before the status indicates the successful setup of the entire MN-CN path.

Note that data packets coming from or sent to other nodes are still routed over the original HAs by default. Since tunnel switches only apply to a specific MN-CN communication session, the forwarding function in proxy HAs should also consider the source address in IP headers.

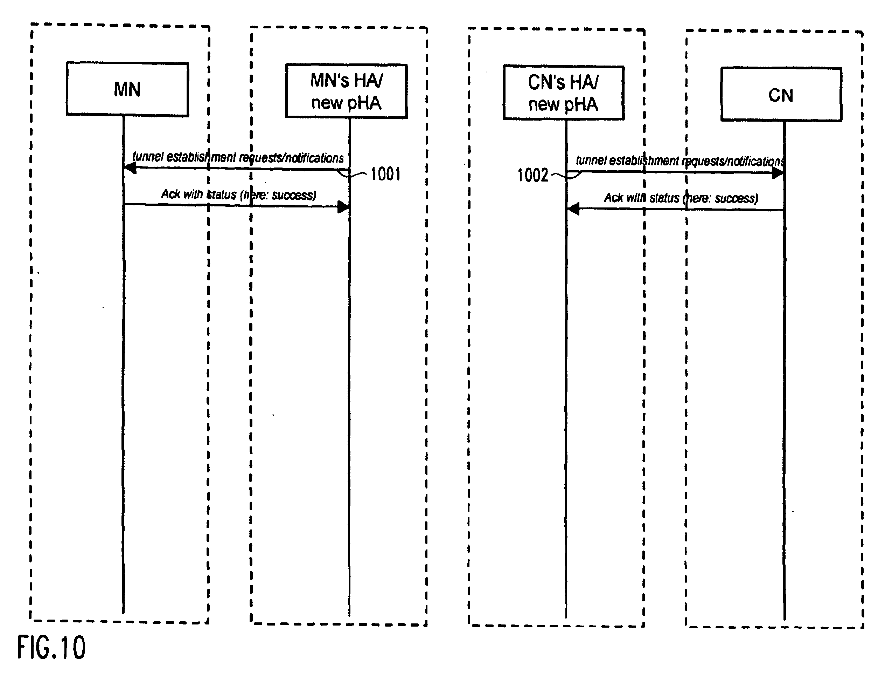

Example of signalling flows for the HA- and MN-controlled variant are shown in Figure 10 for scenario a) and b) and Figure 11 and Figure 12 for scenario c)-e), respectively.

### Path adaptation in the presence of mobility

Generally, ORT can be performed in the background at any time. It can be triggered just after connection establishment with the communication partner or later on demand. Since the MNs can be mobile, the optimized route length can become sub-optimal after some time and a re-execution of ORT will be required. However, since some signalling is required, the procedures should be repeated as infrequently as possible and only if the communication session lasts for a longer time span. Furthermore, the procedures should not be executed when the benefit is low, i.e. if the path is not or only marginally shortened.

The benefit can be determined by repeating the procedure of measuring the route lengths over candidate proxy HAs. Potentially, the target scenario has to be changed, too. One approach is to repeat the distance measurement procedure described further above periodically. This is considered efficient when both MNs are constantly moving and the difference between the current and the optimized path is growing roughly in a linear way. Another way is to trigger the re-execution after every handover or every Nth handover. This is considered efficient if the mobility is low and handovers are rare.

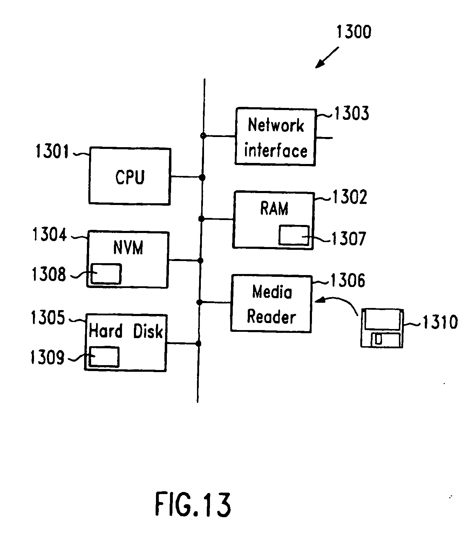

Fig. 13 illustrates a basic structure of a network server 1300 which may be configured to serve as a home agent for MNs in a packet switched mobile communication system. It can be further configured to carry out method steps described above as the (first) MN's HA, the CN's HA, or as any proxy HA. In a very generic implementation, the server is configured to support several or all of the tasks and alternatives described above.

Network server 1300 comprises a processing unit 1301, random access memory 1302 and at least one network interface 1303 to connect it to the packet switched network. It may further comprise non-volatile semiconductor memory 1304 and/or a magnetic or optical hard disk drive 1305. Optionally a reader for any kind of magnetic, optic or semiconductor storage media may be included for the purpose of initial program loading or program update. Network server 1300 may comprise further optional components not shown here like display screen or keyboard.

Binding caches 1307, 1308 and 1309 for storing bindings between HoAs and CoAs of MNs may be reserved memory space in one or several of RAM 1302, NVM 1304 and hard disk 1305.

Network server 1300 may be configured to carry out method steps described above, by executing on its CPU 1301 program instructions stored in RAM 1302, NVM 1304 and/or hard disk 1305. These instructions may be stored for download to these memory locations on any other computer readable storage medium 1310 which can be read by media reader 1306. Such a medium might be a CD (compact disk), DVD (digital versatile disk), floppy disk or semiconductor memory card.

The invention might also apply to other mobility management protocols and systems, in which data packets are routed over some kind of mobility agent which is responsible for mapping the MN's locator to a permanent identifier.

### Multi-homed terminals

In the following, multi-homing support for the HA- and MN-controlled variant of ORT are described in detail. An example scenario with a subset of possible data paths in case the MN has multiple HoAs and CoAs and the CN has multiple CoAs and a single HoA is shown in Figure 14.

A complication with respect to ORT/ROTA is that multiple HAs can exist on a link for load balancing and redundancy reasons and that only one of them may be selected to be on the path (so that all tunnel segments are connected). Otherwise data packets would not use the optimized route to their destination, because proxy HAs do not perform proxy Neighbour Discovery for the proxied HoA (since the prefix of the HoA does not match one of the link's prefixes). If, e.g., MN would select pHA1 as proxy HA and CN would select pHA2 as proxy HA, which is another HA located on the same link than pHA1, CN would reverse tunnels data packets to pHA2, but only pHA1 would be able to tunnel the packets to MN. Hence, the packets would be routed to MN's HA over the non-optimized path. Note that pHA1 cannot perform proxy Neighbor Discovery for MN's HoA (the address does not have an on-link prefix), so the packets would not be intercepted by pHA1.

The main idea is that MN and CN each select one of their HoAs and register at least one CoA per to be used interface with the corresponding HA (this implies that multiple CoAs may be assigned to a single HoA in the Binding Cache of one HA). Furthermore, MN and CN inform HAs about known HAs (e.g., assigned to other interfaces) to be considered as candidate proxy HAs. MN's and CN's HA then independently select the combination of CoAs and proxy HAs that provides the best path and subsequently may negotiate to come to a common solution. The selection algorithm can be based on distance information, which can be determined either passively from received packets or actively by probing.

In the first step, the MN selects one of its HoAs to be used for the communication with CN and, if CN is multi-homed and MN is aware of multiple HoAs of CN, it selects one of CN's HoA as a destination address. The (primary) HAs corresponding to the HoAs are called MN's HA and CN's HA in the following.

To be able to send and receive data on a specific interface using a reverse tunnel to a HA, the MN registers at least one of the addresses assigned to this interface as CoA at MN's HA.

Next, the MN starts ORT (Optimised Reverse Tunnelling) by sending an ORT init request to MN's HA containing MN's HoA and CN's HoA. Additionally, the mobile node may propose all or a subset of the HAs it is registered with as candidate proxy HAs to MN's HA. This information is delivered, e.g., by including their addresses in a new "candidate proxy HA mobility option", which can be carried by a Binding Update message or an ORT init request message.

When MN's HA receives the ORT init request, it may store candidate proxy HA addresses. If some of the candidate proxy HAs are untrusted, the corresponding addresses should be sorted out or marked as such. Next, MN's HA discovers an HA managing the binding for CN's HoA, e.g., using an extended DHAAD procedure. If CN's home network is distributed, the discovery may result in multiple HAs. In this case, MN's HA selects one of them and sends the ORT request to this HA (called CN's HA from now on). Moreover, it may propose candidate proxy HAs to CN's HA (e.g., using the candidate proxy HA option carried by the ORT request), which then may sort out untrusted candidates.

CN's HA sends an ORT init request to CN. On receipt of this request, CN registers at least one address per to be used interface as CoA at CN's HA. Then, it may propose all or a subset of HAs that CN is registered with as candidate proxy HAs to CN's HA (e.g., using the candidate proxy HA option carried by the ORT init reply). After sorting out untrusted candidate proxy HAs, CN's HA in turn may propose all or a subset of them as additional candidate proxy HAs to MN's HA (e.g., using the candidate proxy HA option carried by the ORT reply), which again may sort out the untrusted candidates.

Then, the proxy HA and CoA selection procedure is executed independently on MN's and CN's HA. The selection can be based, among other information, on distance information. Some distance information can be pre-configured or cached from previous session, some can passively be measured, e.g., based on received ORT or Mobile IPv6 signalling messages. E.g., the distance from MN's to CN's HA or from MN/CN to MN/CN's HA may already be known by peeking in the hop limit field of received packets. This information may be sufficient in some scenarios, e.g., if MN's or CN's HA already provide a short enough path when serving as proxy HAs, no further distance information is required.

In other cases, BU information may be exchanged between MN's HA, CN's HA and candidate proxy HAs and distance information may be actively measured or requested from other nodes. The link costs between the candidate proxy HAs and between the candidate proxy HAs and MN's or CN's CoAs can be measured using active probing. If the optimal route shall be found, the length of all paths segments, i.e., between all proxy HAs and to all MN/CN's CoAs must be known. If the path length requirements are known, the proxy HA and CoA selection may be aborted once a (sub-optimal) path fulfilling the requirements has been found before all possible paths have been considered. Also, if scenarios with one proxy HA on the path shall be considered in the selection, the distances between proxy HAs do not need to be measured.

In any case it is required that the selection procedure ends up in the same result on both HAs. One option is to ensure that both HAs have the same input for the selection (addresses and distance information) and use the same selection algorithm to fulfil this requirement. However, if both HAs shall additionally consider local information such as policy information in the selection procedure (i.e. if the output is different on both HAs), or if it shall be possible that the selection algorithm is different on both HAs, additional negotiations are needed between MN's and CN's HA to come to an agreed result. This can be realized by additional ORT request/reply exchanges between the HAs. Those exchanges should be marked with a special flag (e.g. a "negotiation" flag) to distinguish them from session initiation exchanges. In each exchange, a path (i.e. a combination of proxy HA addresses and CoAs) is proposed to the other HA in a request message, which accepts or denies this path in a reply message. It is also possible to include a ranked list of paths in a request message and allow the receiver to select one of the paths in a reply message.

If no agreed conclusion can be found after all possible paths have been proposed or if a pre-defined threshold of allowed exchanges is exceeded, ORT is aborted and standard bi-directional tunnelling is used. If, on the other hand, the selection procedure has successfully ended and a common result has been found, the tunnel endpoints are finally switched as described above and the optimized route can be used for data communication.

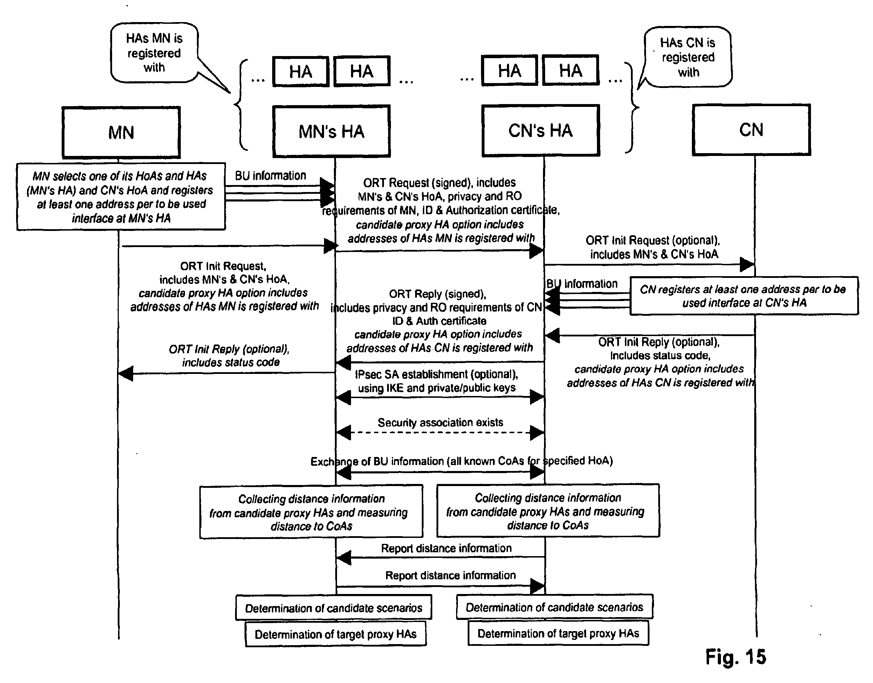

Figure 15 illustrates the initial signalling flow for multi-homed MN and CN in the HA-controlled variant.

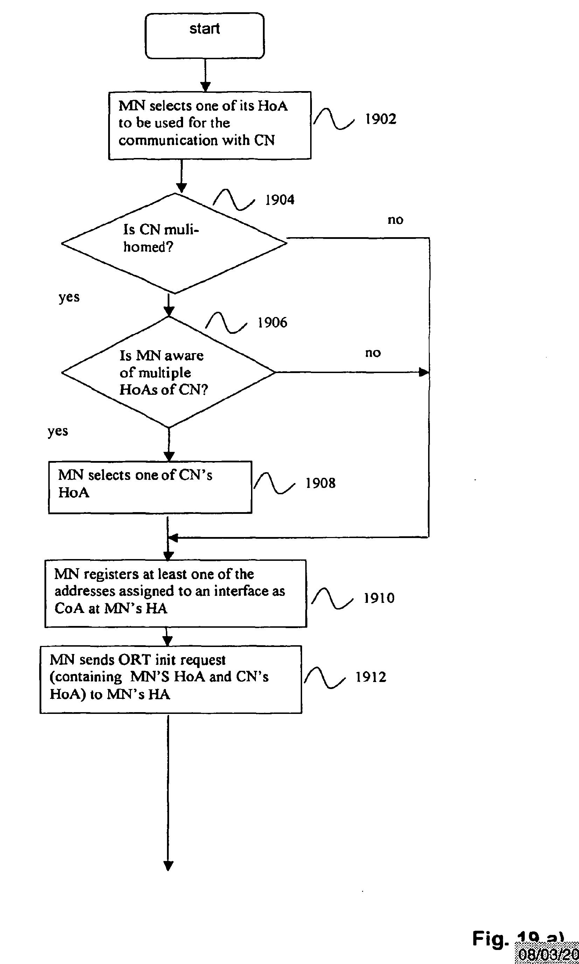

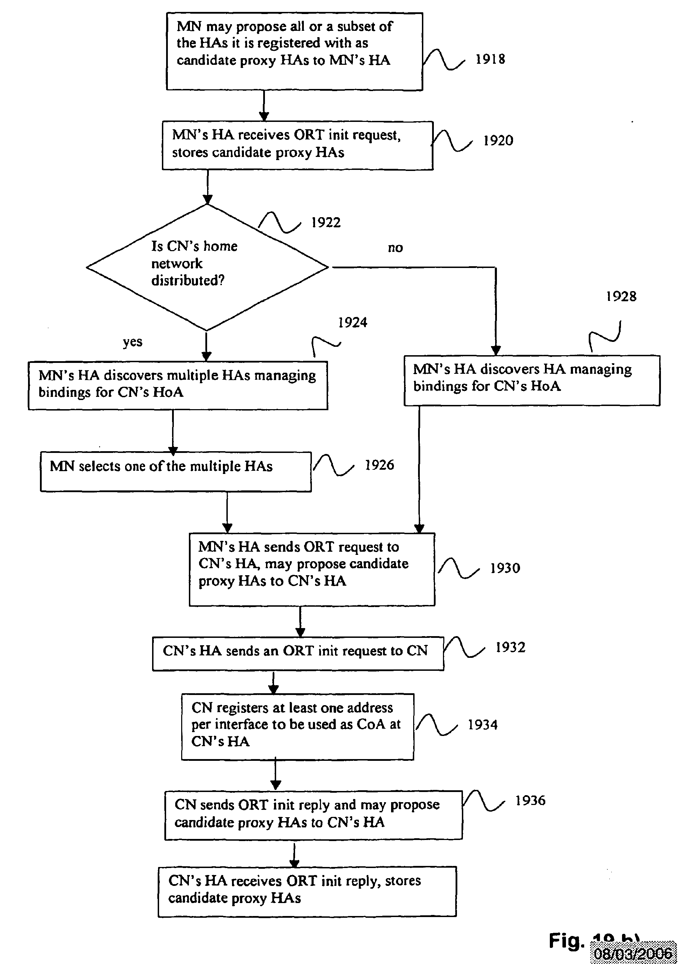

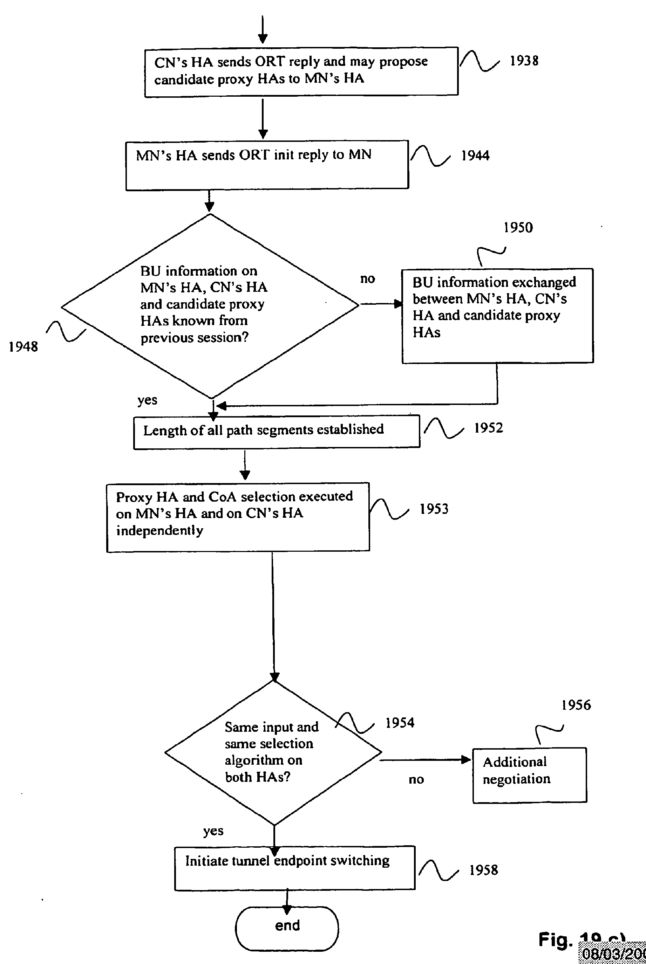

Figures 19.a), 19.b) and 19.c) the HA-controlled variant is illustrated in form of a flow chart. In step 1902 the MN selects one of its HoAs to be used for the communication with the CN. If CN is multi-homed, 1904, and the MN is aware of multiple HoAs for CN, 1906, then the MN selects one of the CN's HoAs in step 1908.

The mobile node registers at least one of the addresses assigned to a considered interface as CoA at MN's HA in step 1910. MN sends an ORT init request to MN's HA in step 1912 before MN may propose all or a subset of the HAs it is registered with as candidate proxy HAs to its HA in step 1918.

In step 1920 MN's HA receives an ORT init request and stores candidate proxy HAs. If CN's home network is distributed, 1922, MN's HA discovers multiple HAs managing bindings for CN's HoA, 1924, and in step 1926 MN selects one of the multiple HAs. If CN's home network is not distributed, MN's HA discovers an HA managing bindings for CN's HoA in step 1928.

In step 1930 MN's HA sends an ORT request to CN's HA and may propose HAs to CN's HA as candidate proxy HAs. When CN's HA receives the ORT request from MN's HA, CN's HA has to sort out not trusted proxy HAs. CN's HA sends an ORT init request to CN in step 1932 and then CN registers at least one address per interface to be used as CoA at CN's HA in step 1934.

In step 1936 CN sends an ORT init reply and may propose candidate proxy HAs to CN's HA. In step 1938 CN's HA sends an ORT reply and may propose additional candidate proxy HAs to MN's HA, which sorts out untrusted HAs. The ORT init reply is then sent by MN's HA to MN in step 1944.

If BU information on MN's HA, CN's HA and candidate proxy HAs is not known from a previous session, 1948, BU information is exchanged between MN's HA, CN's HA and candidate proxy HAs in step 1950. The length of path segments is established in step 1952, including establishing lengths of path segments from MN's HA and CN's HA to candidate proxy HAs and CoAs. Proxy HA and CoA selection is made on MN's HA and CN's HA independently in step 1953.

If the same input and the same selection algorithm used on MN's HA and CN's HA in step 1954 tunnel endpoint switching is initiated in step 1958, otherwise additional negotiation is carried out in step 1956.

The procedure in the MN controlled variant is carried out accordingly, but with the difference that ORT requests/replies are exchanged between MN and CN's HA or CN and MN's HA, respectively. As in the HA-controlled variant, the candidate proxy HAs may be proposed with the mobility option carried by ORT request/reply messages. Additionally, MN and CN send candidate proxy HAs to their own HA, e.g. using the mobility option carried by BU messages.

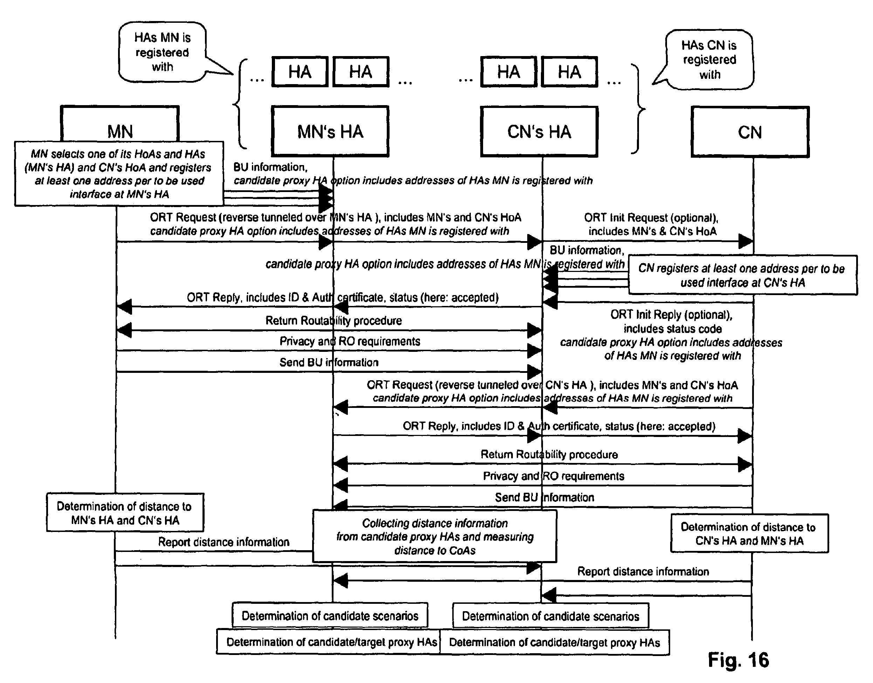

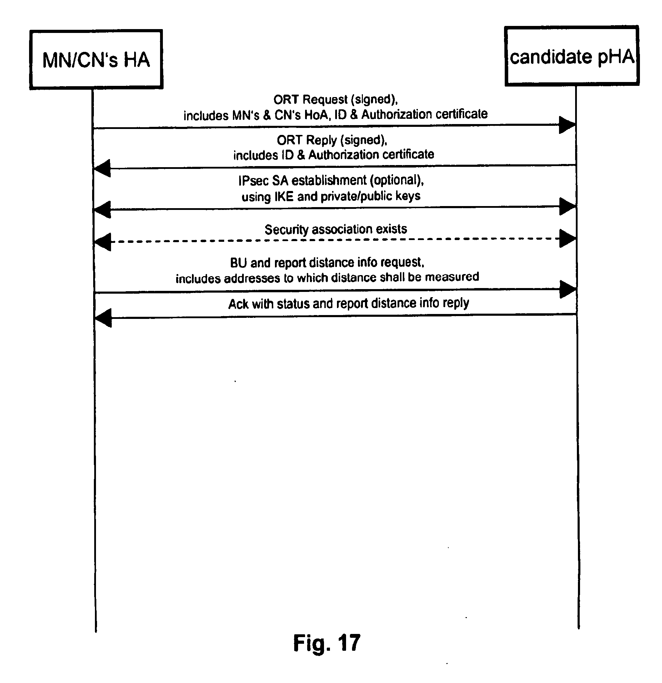

Figure 16 illustrates the initial signalling flow for multi-homed MN and CN in MN-controlled variant and Figure 17 shows the signalling flow for requesting distance information reports from candidate proxy HAs.

In case of mobility, the specific combination of CoAs and the proxy HAs providing the best path may change. Hence, the selection procedure should be repeated. This may include updating binding information in proxy HAs and new distance measurements.

The frequency of repeating this procedure can be chosen as described above. Due to the increased overhead resulting from multi-homing, care must be taken regarding the frequency of repeating. A further reduction of signalling can be achieved, if only a subset of interfaces is used or if the proxy HA selection is aborted once a sufficiently good path has been found.

The invention may be applied (with some changes) to other mobility management and location privacy protocols with similar properties as Mobile IPv6 and ORT.

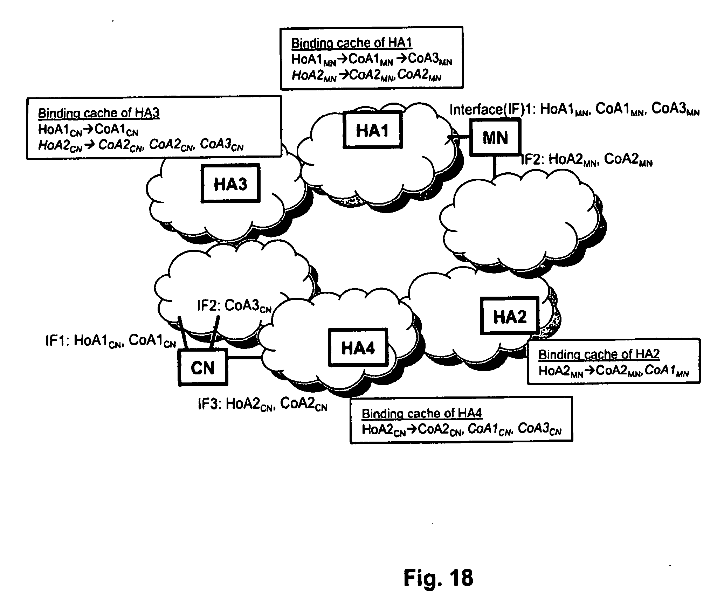

Figure 18 shows an example scenario, in which MN has two interfaces (IF), two HoA and three CoAs. CN has three interfaces, two HoAs and three CoAs. The home links are not distributed. An example of the procedure for finding the optimal path in this scenario using the HA-controlled variant is described in the following:
- MN selects HoA2_{MN} as source and HoA2_{CN} as destination address for the communication with CN.
- MN registers <HoA2_{MN}, CoA1_{MN}, CoA2_{MN} > at HA2, requests ORT
- from HA2 for the communication session <HoA2_{MN},HoA2_{CN}> using the ORT init request message, and informs HA2 about HA1 address as candidate proxy HA address using the candidate proxy HA option.
- HA2 discovers the HA managing a binding for HoA2_{CN}, e.g., using the mechanisms described above. This results in HA4 address.
- HA2 requests ORT from HA4 using the ORT Request message and informs HA4 about HA1 as candidate proxy HA using the candidate proxy HA option.
- HA4 requests ORT from CN using the ORT init request message.
- CN registers <HoA2_{CN}, CoA1CN, CoA2_{CN}, CoA3_{CN} > at HA4, replies to HA4 using the ORT init reply message and informs HA4 about HA3 as candidate proxy HA using the candidate proxy HA option.
- HA4 sends ORT reply to HA2 and informs HA2 about HA3 as candidate proxy HA using the candidate proxy HA option.
- HA2 sends binding information <HoA2_{MN}, CoA1_{MN}, CoA2_{MN}>to HA4.
- HA4 sends binding information <HoA2_{CN}, CoA1_{CN}, CoA2_{CN}, CoA3_{CN} > to HA2.
- HA2 measures distance to CoAs (CoA1_{CN}, CoA2_{CN}, CoA3CN, CoA1MN, CoA2MN) and optionally to candidate proxy HAs (HA4, HA3, HA1) and requests distance information from HA1.
- HA1 measures distance to CoAs (CoA1_{CN}, CoA2_{CN}, CoA3_{CN}, CoA1_{MN}, CoA2_{MN}) and optionally to candidate proxy HAs (HA4, HA3, HA2) and sends distance information report to HA2.
- HA4 measures distance to CoAs (CoA1_{CN}, CoA2_{CN}, CoA3_{CN}, CoA1_{MN}, CoA2_{MN}) and optionally to candidate proxy HAs (HA3, HA1, HA2) and requests distance information from HA3.
- HA3 measures distance to CoAs (CoA1_{CN}, CoA2_{CN}, CoA3_{CN}, CoA1_{MN}, CoA2_{MN}) and optionally to candidate proxy HAs (HA4, HA1, HA2) and sends distance information report to HA4.
- HA2 and HA4 exchange distance information and start selection procedure to determine the combination of proxy HAs and CoAs providing the shortest path.
- HA4 and HA2 send tunnel establishment requests/notifications to MN/CN.

The ORT method is also described in the following:
A method for packet switched data transmission between a first mobile node (101) and a correspondent mobile node (102) in a mobile communication system comprising a plurality of mobile networks (105, 106, 107, 108), the method comprising the steps of
   a) allocating a respective home network (105, 106) to each of the first mobile node and the correspondent mobile node;
   b) providing a network server (103, 104) as home agent in the respective home network to each of the first mobile node and the correspondent mobile node; and
   c) routing data packets from the first mobile node to the correspondent mobile node, over a first data tunnel (201, 301) from the first mobile node to any first one of the home agents and over a second data tunnel (202, 302) from said first one of the home agents to the correspondent mobile node without passing the respective other home agent.
The method above, wherein the first home agent is the home agent (103) of the first mobile node (101), and the method further comprises the step of
   d) routing data packets from the correspondent mobile node (102) to the first mobile node (101) over a third data tunnel (203) from the correspondent mobile node to the home agent (104) of the correspondent mobile node and over a fourth data tunnel (204) from the home agent of the correspondent mobile node to the first mobile node without passing the home agent (103) of the first mobile node.
The method above, wherein the first home agent is the home agent (103) of the first mobile node (101), the first (301) and second (302) data tunnels are bidirectional tunnels, and the method further comprises the step of
   e) routing data packets over the second data tunnel and the first data tunnel from the correspondent mobile node (102) to the first mobile node (101).
The method above, comprising, prior to step c), the steps of
   f) determining (812) distances from the home agent (103) of the first mobile node to the first mobile node (101) and to the correspondent mobile node (102);
   g) determining (813) distances from the home agent (104) of the correspondent mobile node to the first mobile node (101) and to the correspondent mobile node (102); and
   h) selecting (817), using the determined distances, one of the two home agents as end point of the first tunnel and as start point of the second tunnel.
The method above, further comprising, after step g) and before step h), a step (814, 815) of exchanging distance information between both home agents.
The method above, wherein steps f) to h) are repeated in predetermined time intervals or after a predetermined number of handovers.
The method above, further comprising a step of sending, after step h), a tunnel establishment request or notification message (1001) from the home agent of first mobile node to the first mobile node.
The method above, further comprising, prior to step c), and, if applicable, prior to step f), the steps of
   j) sending, from the home agent (103) of the first mobile node, a message (804) to the home agent (104) of the correspondent mobile node, the message comprising home addresses of the first mobile node and the correspondent mobile node;
   k) sending a signed reply (807) from the home agent (104) of the correspondent mobile node to the home agent (103) of the first mobile node, the reply comprising a certified identifier and an authorisation certificate of the home agent of the correspondent mobile node;
   I) establishing (809) a security association (810) between the home agent of the first mobile node and the home agent of the correspondent mobile node; and
   m) sending binding update information (811) comprising care-of-address and home address of the first mobile node, from the home agent of the first mobile node to the home agent of the correspondent mobile node, using said security association, and storing the binding update information in the home agent of the correspondent mobile node.
The method above, further comprising, prior to step c), and, if applicable, prior to step f), the steps of
   n) sending, from the first mobile node (101), a message (901) to the home agent (104) of the correspondent mobile node, the message comprising home addresses of the first mobile node and the correspondent mobile node;
   o) sending a signed reply (902) from the home agent of the correspondent mobile node to the first mobile node, the reply comprising a certified identifier and an authorisation certificate of the home agent of the correspondent mobile node;
   p) establishing a security association (904) between the first mobile node and the home agent of the correspondent mobile node; and
   q) sending binding update information (906) comprising care-of-address and home address of the first mobile node, from the first mobile node to the home agent of the correspondent mobile node, using said security association established in step p), and storing the binding update information in the home agent of the correspondent mobile node.
The method above, further comprising, before step p), a step of executing a return routability procedure (903) between the first mobile node (101) and the home agent (104) of the correspondent mobile node.
The method above, further comprising the steps of
   u) providing at least one of the following further routing options for packet switched data transmission between the first mobile node and the correspondent mobile node and vice versa, using proxy home agents which store binding information of mobile nodes each allocated to a different network than the network of the respective proxy home agent:
   i) a bidirectional data tunnel from the first mobile node to a proxy home agent in the visited network of the first mobile node, on to a proxy home agent in the visited network of the correspondent mobile node and on to the correspondent mobile node without passing any of the home agents of first mobile node and correspondent mobile node, wherein at least one of the proxy home agents is not an access router;
   ii) a bidirectional data tunnel from the first mobile node to a proxy home agent in the visited network either of the first mobile node or of the correspondent mobile node and on to the correspondent mobile node without passing any of the home agents of first mobile node and correspondent mobile node; and
   iii) a bidirectional data tunnel from the first mobile node to a proxy home agent in a network located between the visited network of the first mobile node and the visited network of the correspondent mobile node and on to the correspondent mobile node without passing any of the home agents of first mobile node and correspondent mobile node; and
   v) selecting (816) between at least two of the routing options described in the above and sub-steps i) to iii).

The method above, wherein steps v) and f) to h) are repeated in predetermined time intervals or after a predetermined number of handovers.

A network server (1300) configured to serve as a home agent (103) for a first mobile node (101) sending data packets to a correspondent mobile node (102) in a mobile communication system comprising a plurality of mobile networks (105, 106, 107, 108), the server being further configured to establish a data tunnel (202, 302) directly to said correspondent mobile node without passing a home agent (104) of said correspondent mobile node, for the purpose of forwarding data packets received from said first mobile node to said correspondent mobile node.

The network server (1300) above, further configured to establish said data tunnel as a bidirectional data tunnel (202), to receive data packets from said correspondent mobile node (102) via said data tunnel, and to forward said received data packets to said first mobile node (101).

The network server (1300) above, further configured
to determine distances to said first mobile node (101) and to said correspondent mobile node (102);
to receive, from the home agent (104) of the correspondent mobile node, information about distances from the home agent of the correspondent mobile node to the correspondent mobile node and to the first mobile node; and
to select, using the determined distances, one of the two home agents for said forwarding of data packets.

The network server (1300) above, comprising a binding cache (1307, 1308, 1309) and being further configured
to send a message to the home agent (104) of the correspondent mobile node, the message comprising home addresses of the first mobile node (101) and the correspondent mobile node (102);
to receive a signed reply from the home agent of the correspondent mobile node, the reply comprising a certified identifier and an authorisation certificate of the home agent of the correspondent mobile node;
to establish a security association to the home agent of the correspondent mobile node; and
to receive, from the home agent of the correspondent mobile node and using said security association, binding update information comprising care-of-address and home address of the correspondent mobile node, and to store the binding update information in the binding cache.

The network server (1300) above, further configured to send tunnel establishment request or notification messages to the first mobile node (101).

The network server (1300) above, further configured
to receive a message from the home agent (104) of the correspondent mobile node, the message comprising home addresses of the first mobile node (101) and the correspondent mobile node (102);
to send a signed reply to the home agent of the correspondent mobile node, the reply comprising an identifier of the home agent of the correspondent mobile node and an authorisation certificate;
to establish a security association to the home agent of the correspondent mobile node; and
to send, to the home agent of the correspondent mobile node and using said security association, binding update information comprising care-of-address and home address of the correspondent mobile node.

The network server (1300) above, comprising a binding cache (1307, 1308, 1309) and being further configured
to establish a security association with the correspondent mobile node (102); and
to receive binding update information comprising care-of-address and home address of the correspondent mobile node, from the correspondent mobile node using said security association, and to store the binding update information in the binding cache.

The network server (1300) above, further configured to execute a return routability procedure with the correspondent mobile node (102).

A computer-readable storage medium (1304, 1305, 1310) having stored thereon instructions which, when executed on a processor (1301) of a network server (1300), cause the network server to serve as a home agent (103) for a first mobile node (101) sending data packets to a correspondent mobile node (102) in a mobile communication system comprising a plurality of mobile networks (105, 106, 107, 108), and to establish a data tunnel directly to said correspondent mobile node without passing a home agent (104) of said correspondent mobile node, for the purpose of forwarding data packets received from said first mobile node to said correspondent mobile node.

### List of abbreviations

- AR: Access Router
- BU: Binding Update
- CN: Corresponding Node
- CoA: Care-of-Address
- CHA: Home Agent of Corresponding Node
- CGA: Cryptographically Generated Address
- DHAAD: Dynamic Home Agent Address Discovery
- DNS: Domain Name System
- HA: Home Agent
- HMIP: Hierarchical Mobile Internet Protocol Version 6
- HN: Home Network
- HoA: Home Address
- IKE: Internet Key Exchange
- LPA: Location Privacy Agent
- LCS: Location Privacy Server
- MAP: Mobility Anchor Point
- MN: Mobile Node
- ORC: Optimised Route Cache Protocol
- ORT: Optimised Reverse Tunnelling
- pHA: Proxy Home Agent
- RA: Router Advertisement
- RcoA: Regional Care-of-Address
- RO: Route Optimization
- SEND: Secure Neighbour discovery
- VoIP: Voice over Internet Protocol

## Claims

1. A method for packet-switched data transmission between a multi-homed mobile node and a correspondent node in a mobile communication system comprising a plurality of mobile networks, the method comprising the steps of:
a) selecting (1902) by the mobile node one of its home addresses and the corresponding home agent to be used for communication with the correspondent node;
b) registering (1910) by the mobile node at least one of a plurality of addresses assigned to a considered network interface as the mobile node's respective care-of-addresses at a mobile node's home agent responsible for the selected home address, and mapping of the selected home address to the mobile node's respective care-of-addresses by the home agent;
i) sending by the mobile node addresses of candidate proxy home agents stored at the mobile node to a mobile node's home agent and by the mobile node to a correspondent node's home agent or by the mobile node's home agent to a correspondent node's home agent;
c) receiving and storing by a correspondent node's home agent and by the mobile node's home agent candidate proxy home agent addresses;
d) sending (1932) by the correspondent node's home agent a request message to the correspondent node for requesting the setup of an optimized route with the mobile node, where the request message contains at least the mobile node's and the correspondent node's home address;
e) registering (1934) by the correspondent node at least one of a plurality of addresses assigned to a considered network interface as the correspondent node's care-of-address for the correspondent node's home address contained in the request message at the correspondent node's home agent;
j) sending by the correspondent node addresses of candidate proxy home agents stored at the correspondent node to a correspondent node's home agent and by the correspondent node to a mobile node's home agent or by the correspondent node's home agent to the mobile node's home agent;
f) selecting (1946) same of at least one of the stored proxy home agent addresses, one of the mobile node's care-of-addresses, and one of the correspondent node's care-of-addresses on both the mobile node's home agent and the corresponding node's home agent; and
g) triggering (1958) the mobile node by the mobile node's home agent to switch a tunnel, two endpoints of the tunnel being one of the selected proxy home agent addresses and the selected mobile node's care-of addresses as selected in step f);
h) triggering (1958) the correspondent node by the correspondent node's home agent to switch a tunnel, two endpoints of the tunnel being one of the selected proxy home agent addresses and the correspondent node's care-of addresses as selected in step f).

2. The method according to claim 1, wherein the request message in step d) is an optimised reverse tunnelling initiation request.

3. The method according to claim 1, wherein step i) comprises the following steps:
sending (1912) by the mobile node to its home agent an optimised reverse tunnelling initiation request;
receiving (1920) by the mobile node's home agent the optimised reverse tunnelling initiation request and storing of candidate proxy home agent addresses;
finding (1924, 1926, 1928) by the mobile node's home agent a home agent that manages bindings for a correspondent node's home address; and
sending (1930) an optimised reverse tunnelling request by the mobile node's home agent to the found correspondent node's home agent.

4. The method according to claim 1, wherein step j) comprises the following steps:
sending (1912) by the correspondent node to its home agent an optimised reverse tunnelling initiation reply;
receiving (1920) by the correspondent node's home agent the optimised reverse tunnelling initiation reply and storing of candidate proxy home agent addresses; and
sending (1930) an optimised reverse tunnelling reply by the correspondent node's home agent to the mobile node's home agent.

5. The method according to claim 1, wherein step i) comprises the following steps:
sending (1912) by the mobile node to its home agent addresses of candidate proxy home agents;
receiving (1920) and storing by the mobile node's home agent candidate proxy home agent addresses;
finding (1924, 1926, 1928) by the mobile node a home agent that manages bindings for a correspondent node's home address; and
sending (1930) an optimised reverse tunnelling request by the mobile node to the found correspondent node's home agent.

6. The method according to claim 1, wherein step j) comprises the following steps:
sending (1912) by the correspondent node to its home agent addresses of candidate proxy home agents;
receiving (1920) and storing by the correspondent node's home agent candidate proxy home agent addresses;
finding (1924, 1926, 1928) by the correspondent node a home agent that manages bindings for a mobile node's home address; and
sending (1930) an optimised reverse tunnelling reply by the correspondent node to the mobile node's home agent.

7. The method according to any of claims 3 to 6, wherein the step of sending an optimised tunnelling request or reply is followed by proposing candidate proxy home agent addresses to the respective home agent.

8. The method according to any of claims 1 to 7 wherein step f) is carried out to select a shortest path.

9. The method according to any of claims 1 to 7 wherein step f) is carried out to select a path with a shortest delay.

10. The method according to any of claims 1 to 9 further comprising the following step before step d):
selecting (1908) by the mobile node one of the correspondent node's home addresses as destination address.

11. The method according to any of steps 1 to 10, further comprising the following step:
rejecting untrusted proxy home agents by the mobile node's home agent.

12. The method according to any of steps 1 to 11, further comprising the following step:
rejecting untrusted proxy home agents by the correspondent node's home agent.

13. A mobile node in a mobile communication system for packet-switched data transmission between a multi-homed mobile node and a correspondent node, the mobile node comprising:
selection means adapted to select one of its home addresses to be used for communication with the correspondent node;
transmission means adapted to register at least one of a plurality of addresses assigned to a considered network interface as the mobile node's respective care-of-addresses at a mobile node's home agent responsible for the selected home address; and
transmission means adapted to send addresses of candidate proxy home agents stored at the mobile node to a mobile node's home agent and to a correspondent node's home agent;
reception means adapted to receive a trigger from the mobile node's home agent to switch a tunnel, two endpoints of the tunnel being one of a previously selected proxy home agent addresses and a previously selected mobile node's care-of address, and means adapted to switch the data tunnel by the mobile node accordingly;
transmission means adapted to send an optimized reverse tunnelling initiation request to the mobile node's home agent containing addresses of candidate proxy home agents;
means to select a home address of the correspondent node; and
means to discover a correspondent node's home agent managing the binding for the home address of the correspondent node selected by the mobile node.

14. The mobile node according to claim 13, further comprising:
transmission means adapted to send an optimized reverse tunnelling initiation reply to the mobile node's home agent containing addresses of candidate proxy home agents.

15. The mobile node according to claim 13 or 14, further comprising:
transmission means adapted to send addresses of candidate proxy home agents to the mobile node's home agent.

16. The mobile node according to any of claims 13 to 15, further comprising:
transmission means adapted to send addresses of candidate proxy home agents to the found correspondent node's home agent.

17. The mobile node according to any of claims 13 to 16, further comprising:
transmission means adapted to send an optimized reverse tunnelling request to the found correspondent node's home agent.

18. The mobile node according to any of claims 13 to 17, further comprising:
transmission means adapted to send probe messages to the mobile node's home agent and the found correspondent node's home agent to determine distances of paths.

19. The mobile node according to any of claims 13 to 18, further comprising:
transmission means adapted to send reports of distance information to the mobile node's home agent and the found correspondent node's home agent.

20. The mobile node according to any of claims 13 to 19, further comprising:
routing means adapted to route data packets to a correspondent mobile node, over a first data tunnel (201, 301) from the mobile node to the mobile node's home agent and over a second data tunnel (202, 302) from the mobile node's home agent to the correspondent mobile node without passing a respective other home agent.

21. The mobile node according to any of claim 13 to 20 wherein data packets are routed from the correspondent mobile node (102) to the mobile node (101) over a third data tunnel (203) from the correspondent mobile node to the home agent (104) of the correspondent mobile node and over a fourth data tunnel (204) from the home agent of the correspondent mobile node to the mobile node without passing the home agent (103) of the mobile node.

22. The mobile node of any of claims 13 to 21 wherein the first home agent is the home agent (103) of the mobile node (101), the first (301) and second (302) data tunnels are bidirectional tunnels, and
wherein data packets are routed over the second data tunnel and the first data tunnel from the correspondent mobile node (102) to the mobile node (101).

23. The mobile node according to any of claims 13 to 22 further comprising receiving means adapted to receive a message for:
determining (812) distances from the home agent (103) of the mobile node to the mobile node (101) and to the correspondent mobile node (102); and
determining (813) distances from the home agent (104) of the correspondent mobile node to the mobile node (101) and to the correspondent mobile node (102).

24. The mobile node of any of claims 13 to 23 wherein a tunnel establishment request or notification message (1001) is sent from the home agent of the mobile node to the mobile node.

25. The mobile node according to any of claims 13 to 24, wherein a message is sent from the home agent (103) of the mobile node to the home agent (104) of the correspondent mobile node, the message comprising home addresses of the mobile node and the correspondent mobile node;
the mobile node comprises receiving means adapted to receive a signed reply (807) from the home agent (104) of the correspondent mobile node, the reply comprising a certified identifier and an authorisation certificate of the home agent of the correspondent mobile node;
wherein a security association (810) is established between the the mobile node and the home agent of the correspondent mobile node; and
the mobile node comprises transmission means adapted to send binding update information (811) comprising care-of-address and home address of the mobile node, to the home agent of the correspondent mobile node, use said security association, and store the binding update information in the home agent of the correspondent mobile node.

26. The mobile node according to any of claims 13 to 25 wherein a return routability procedure (903) is executed between the mobile node (101) and the home agent (104) of the correspondent mobile node.

27. The mobile node according to any of claims 13 to 26, further comprising:
means adapted to set up a bidirectional data tunnel to a proxy home agent in the visited network of the mobile node, on to a proxy home agent in the visited network of the correspondent mobile node and on to the correspondent mobile node without passing any of the home agents of the mobile node and correspondent mobile node, wherein at least one of the proxy home agents is not an access router;
means adapted to set up a bidirectional data tunnel to a proxy home agent in the visited network either of the mobile node or of the correspondent mobile node and on to the correspondent mobile node without passing any of the home agents of the mobile node and correspondent mobile node; and
means adapted to set up a bidirectional data tunnel to a proxy home agent in a network located between the visited network of the mobile node and the visited network of the correspondent mobile node and on to the correspondent mobile node without passing any of the home agents of the mobile node and correspondent mobile node; and
selecting means adapted to select (816) between at least two of the routing options described in the above.

28. A correspondent node's home agent in a mobile communication system for packet-switched data transmission between a multi-homed mobile node and a correspondent node, the correspondent node's home agent comprising:
transmission means adapted to send a request message to the correspondent node for requesting the setup of an optimized route with the mobile node; where the request message contains at least the mobile node's home address and the correspondent node's home address;
receiving means adapted to receive proxy candidate home agent addresses;
storage means adapted to store proxy candidate home agent addresses;
selection means adapted to select at least one of the proxy home agent addresses, one of a mobile node's care-of addresses and one of a correspondent node's care-of-addresses; and
triggering means adapted to trigger the correspondent node to switch a tunnel, so that two endpoints of the tunnel are one of the selected proxy home agent addresses and the correspondent node's care-of addresses.

29. A correspondent node in a mobile communication system for packet-switched data transmission between a multi-homed mobile node and a correspondent node, the correspondent node comprising:
storage means adapted to register at least one of a plurality of addresses assigned to a considered network interface as care-of-address at the correspondent node's home agent.

30. A mobile node's home agent in a mobile communication system for packet-switched data transmission between a multi-homed mobile node and a correspondent node, the mobile node's home agent comprising:
selection means adapted to select at least one of a proxy home agent addresses, one of a mobile node's care-of addresses and one of a correspondent node's care-of-addresses; and
triggering means adapted to trigger the mobile node to switch a tunnel, so that two endpoints of the tunnel are one of the selected proxy home agent addresses and the correspondent node's care-of addresses.

31. A mobile communication system for packet-switched data transmission between a multi-homed mobile node and a correspondent node, the mobile communication system comprising the mobile node according to claim 13, the correspondent node according to claim 29, the correspondent node's home agent according to claim 28 and the mobile node's home agent according to claim 30.

32. The mobile communication system according to claim 31 adapted to carry out the method of claims 2 to 12.

33. A computer readable medium storing instructions that, when executed by a processor of a mobile node, cause the mobile node to engage in optimised reverse tunnelling for multi-homed terminals, by:
selecting one of its home addresses to be used for communication with the correspondent node;
registering at least one of a plurality of addresses assigned to a considered network interface as the mobile node's respective care-of-addresses at a mobile node's home agent responsible for the selected home address; and
sending addresses of candidate proxy home agents stored at the mobile node to a . mobile node's home agent and to a correspondent node's home agent; and
receiving a trigger from the mobile node's home agent to switch a tunnel, two endpoints of the tunnel being one of a previously selected proxy home agent addresses and a previously selected mobile node's care-of-address, and switching the data tunnel by the mobile node accordingly;
sending an optimized reverse tunnelling initiation request to the mobile node's home agent containing addresses of candidate proxy home agents; and
selecting a home address of the correspondent node; and discovering a correspondent node's home agent managing the binding for the home address of the correspondent node selected by the mobile node.

34. A computer readable medium storing instructions that, when executed by a processor of a correspondent node's home agent, cause the correspondent node's home agent to engage in optimised reverse tunnelling for multi-homed terminals, by:
sending a message request to the correspondent node for requesting the step of an optimized route with the mobile node, where the request message contains at least the mobile node's home address;
receiving proxy candidate home agent addresses;
storing proxy candidate home agent addresses;
selecting at least one of the proxy home agent addresses, one of a mobile node's care-of addresses and one of a correspondent node's care-of-addresses; and
triggering the correspondent node to switch a tunnel, so that two endpoints of the tunnel are one of the selected proxy home agent addresses and the correspondent node's care-of addresses.

## Patentansprüche

1. Verfahren zur paketgeschalteten Datenübertragung zwischen einem mehrfachvernetzten Mobilknoten und einem Korrespondenzknoten in einem Mobilkommunikationssystem, das eine Mehrzahl von Mobilnetzwerken umfasst, wobei das Verfahren die nachfolgenden Schritte umfasst:
(a) durch den Mobilknoten erfolgendes Auswählen (1902) von einer von seinen Heimadressen und dem entsprechenden Heimagent zur Verwendung für eine Kommunikation mit dem Korrespondenzknoten;
(b) durch den Mobilknoten erfolgendes Registrieren (1910) von wenigstens einer aus einer Mehrzahl von Adressen mit Zuweisung an eine betrachtete Netzwerkschnittstelle als dem Mobilknoten zu eigene jeweilige Care-of-Adressen bei einem dem Mobilknoten zu eigenen Heimagent, der für die ausgewählte Heimadresse verantwortlich ist, und Abbilden der ausgewählten Heimadresse auf die dem Mobilknoten zu eigenen jeweiligen Care-of-Adressen durch den Heimagent;
(i) durch den Mobilknoten erfolgendes Senden von Adressen von Kandidatenproxyheimagenten mit Speicherung bei dem Mobilknoten an einen dem Mobilknoten zu eigenen Heimagent und durch den Mobilknoten an einen dem Korrespondenzknoten zu eigenen Heimagent oder durch den dem Mobilknoten zu eigenen Heimagent an einen dem Korrespondenzknoten zu eigenen Heimagent;
(c) durch einen dem Korrespondenzknoten zu eigenen Heimagent und durch den dem Mobilknoten zu eigenen Heimagent erfolgendes Empfangen und Speichern von Kandidatenproxyheimagentenadressen;
(d) durch den dem Korrespondenzknoten zu eigenen Heimagent erfolgendes Senden (1932) einer Anforderungsnachricht an den Korrespondenzknoten zum Anfordern des Einrichtens einer optimierten Route mit dem Mobilknoten, wobei die Anforderungsnachricht wenigstens die dem Mobilknoten und dem Korrespondenzknoten zu eigene Heimadresse enthält;
(e) durch den Korrespondenzknoten erfolgendes Registrieren (1934) von wenigstens einer aus einer Mehrzahl von Adressen mit Zuweisung an eine betrachtete Netzwerkschnittstelle als dem Korrespondenzknoten zu eigene Care-of-Adresse für die dem Korrespondenzknoten zu eigene Heimadresse in der Anforderungsnachricht bei dem dem Korrespondenzknoten zu eigenen Heimagent;
(j) durch den Korrespondenzknoten erfolgendes Senden von Adressen von Kandidatenproxyheimagenten mit Speicherung an dem Korrespondenzknoten an einen dem Korrespondenzknoten zu eigenen Heimagent und durch den Korrespondenzknoten an einen dem Mobilknoten zu eigenen Heimagent oder durch den dem Korrespondenzknoten zu eigenen Heimagent an den dem Mobilknoten zu eigenen Heimagent;
(f) Auswählen (1946) von selbigem von wenigstens einer von den gespeicherten Proxyheimagentenadressen, einer von den dem Mobilknoten zu eigenen Care-of-Adressen und einer von den dem Korrespondenzknoten zu eigenen Care-of-Adressen sowohl auf dem dem Mobilknoten zu eigenen Heimagent wie auch dem dem Korrespondenzknoten zu eigenen Heimagent; und
(g) Anregen (1958) des Mobilknotens durch den dem Mobilknoten zu eigenen Heimagent zum Schalten eines Tunnels, wobei zwei Endpunkte des Tunnels eine von den ausgewählten Proxyheimagentenadressen und den ausgewählten dem Mobilknoten zu eigenen Care-of-Adressen gemäß Auswahl in Schritt (f) sind;
(h) Anregen (1958) des Korrespondenzknotens durch den dem Korrespondenzknoten zu eigenen Heimagent zum Schalten eines Tunnels, wobei zwei Endpunkte des Tunnels eine von den ausgewählten Proxyheimagentenadressen und den dem Korrespondenzknoten zu eigenen Care-of-Adressen gemäß Auswahl in Schritt (f) sind.

2. Verfahren nach Anspruch 1, wobei die Anforderungsnachricht in Schritt (d) eine optimierte Umkehrtunnelungsinitiierungsanforderung ist.

3. Verfahren nach Anspruch 1, wobei Schritt (i) die nachfolgenden Schritte umfasst:
durch den Mobilknoten an seinen Heimagent erfolgendes Senden (1912) einer optimierten Umkehrtunnelungsinitiierungsanforderung;
durch den dem Mobilknoten zu eigenen Heimagent erfolgendes Empfangen (1920) der optimierten Umkehrtunnelungsinitiierungsanforderung und Speichern von Kandidatenproxyheimagentenadressen;
durch den dem Mobilknoten zu eigenen Heimagent erfolgendes Ausfindigmachen (1924, 1926, 1928) eines Heimagent zur Verwaltung von Verknüpfungen für eine dem Korrespondenzknoten zu eigene Heimadresse; und
Senden (1930) einer optimierten Umkehrtunnelungsanforderung durch den dem Mobilknoten zu eigenen Heimagent an den ausfindiggemachten dem Korrespondenzknoten zu eigenen Heimagent.

4. Verfahren nach Anspruch 1, wobei Schritt (j) die nachfolgenden Schritte umfasst:
durch den Korrespondenzknoten an seinen Heimagent erfolgendes Senden (1912) einer optimierten Umkehrtunnelungsinitiierungsantwort;
durch den dem Korrespondenzknoten zu eigenen Heimagent erfolgendes Empfangen (1920) der optimierten Umkehrtunnelungsinitiierungsantwort und Speichern von Kandidatenproxyheimagentenadressen; und
Senden (1930) einer optimierten Umkehrtunnelungsantwort durch den dem Korrespondenzknoten zu eigenen Heimagent an den dem Mobilknoten zu eigenen Heimagent.

5. Verfahren nach Anspruch 1, wobei Schritt (i) die nachfolgenden Schritte umfasst:
durch den Mobilknoten an seinen Heimagent erfolgendes Senden (1912) von Adressen von Kandidatenproxyheimagenten;
durch den dem Mobilknoten zu eigenen Heimagent erfolgendes Empfangen (1920) und Speichern von Kandidatenproxyheimagentenadressen;
durch den Mobilknoten erfolgendes Ausfindigmachen (1924, 1926, 1928) eines Heimagent zum Verwalten von Verknüpfungen für eine dem Korrespondenzknoten zu eigene Heimadresse; und
Senden (1930) einer optimierten Umkehrtunnelungsanforderung durch den Mobilknoten an den ausfindiggemachten dem Korrespondenzknoten zu eigenen Heimagent.

6. Verfahren nach Anspruch 1, wobei Schritt (j) die nachfolgenden Schritte umfasst:
durch den Korrespondenzknoten an seinen Heimagent erfolgendes Senden (1912) von Adressen von Kandidatenproxyheimagenten;
durch den dem Korrespondenzknoten zu eigenen Heimagent erfolgendes Empfangen (1920) und Speichern von Kandidatenproxyheimagentenadressen;
durch den Korrespondenzknoten erfolgendes Ausfindigmachen (1924, 1926, 1928) eines Heimagent zum Verwalten von Verknüpfungen für eine dem Mobilknoten zu eigene Heimadresse; und
Senden (1930) einer optimierten Umkehrtunnelungsantwort durch den Korrespondenzknoten an den dem Mobilknoten zu eigenen Heimagent.

7. Verfahren nach einem der Ansprüche 3 bis 6, wobei der Schritt des Sendens einer optimierten Tunnelungsanforderung oder -antwort von einem Vorlegen von Kandidatenproxyheimagentenadressen bei dem jeweiligen Heimagent gefolgt ist.

8. Verfahren nach einem der Ansprüche 1 bis 7, wobei Schritt (f) zur Auswahl eines kürzesten Weges ausgeführt wird.

9. Verfahren nach einem der Ansprüche 1 bis 7, wobei Schritt (f) zur Auswahl eines Weges mit einer kürzesten Verzögerung ausgewählt wird.

10. Verfahren nach einem der Ansprüche 1 bis 9, des Weiteren vor Schritt (d) umfassend den nachfolgenden Schritt:
durch den Mobilknoten erfolgendes Auswählen (1908) von einer der dem Korrespondenzknoten zu eigenen Heimadressen als Zielortadresse.

11. Verfahren nach einem der Schritte bzw. Ansprüche 1 bis 10, des Weiteren umfassend den nachfolgenden Schritt:
Zurückweisen von nichtvertrauenswürdigen Proxyheimagenten durch den dem Mobilknoten zu eigenen Heimagent.

12. Verfahren nach einem der Schritte bzw. Ansprüche 1 bis 11, des Weiteren umfassend den nachfolgenden Schritt:
Zurückweisen von nichtvertrauenswürdigen Proxyheimagenten durch den dem Korrespondenzknoten zu eigenen Heimagent.

13. Mobilknoten in einem Mobilkommunikationssystem zur paketgeschalteten Datenübertragung zwischen einem mehrfachvernetzten Mobilknoten und einem Korrespondenzknoten, wobei der Mobilknoten umfasst:
Auswahlmittel zum Auswählen von einer von seinen Heimadressen zur Verwendung für eine Kommunikation mit dem Korrespondenzknoten;
Übertragungsmittel zum Registrieren von wenigstens einer aus einer Mehrzahl von Adressen mit Zuweisung an eine betrachtete Netzwerkschnittstelle als dem Mobilknoten zu eigene jeweilige Care-of-Adressen bei einem dem Mobilknoten zu eigenen Heimagent, der für die ausgewählte Heimadresse verantwortlich ist; und
Übertragungsmittel zum Senden von Adressen von Kandidatenproxyheimagenten mit Speicherung an dem Mobilknoten an einen dem Mobilknoten zu eigenen Heimagent und an einen dem Korrespondenzknoten zu eigenen Heimagent;
Empfangsmittel zum Empfangen einer Anregung von dem dem Mobilknoten zu eigenen Heimagent zum Schalten eines Tunnels, wobei zwei Endpunkte des Tunnels eine von einer vorher ausgewählten Proxyheimagentenadresse bzw. Adressen und einer vorher ausgewählten dem Mobilknoten zu eigenen Care-of-Adresse sind; und
Mittel zum entsprechenden Schalten des Datentunnels durch den Mobilknoten;
Übertragungsmittel zum Senden einer optimierten Umkehrtunnelungsinitiierungsanforderung an den dem Mobilknoten zu eigenen Heimagent mit Adressen von Kandidatenproxyheimagenten;
Mittel zum Auswählen einer Heimadresse des Korrespondenzknotens; und
Mittel zum Auffinden eines dem Korrespondenzknoten zu eigenen Heimagent zum Verwalten der Verknüpfung für die Heimadresse des Korrespondenzknotens gemäß Auswahl durch den Mobilknoten.

14. Mobilknoten nach Anspruch 13, des Weiteren umfassend:
Übertragungsmittel zum Senden einer optimierten Umkehrtunnelungsinitiierungsantwort an den dem Mobilknoten zu eigenen Heimagent mit Adressen von Kandidatenproxyheimagenten.

15. Mobilknoten nach Anspruch 13 oder 14, des Weiteren umfassend:
Übertragungsmittel zum Senden von Adressen von Kandidatenproxyheimagenten an den dem Mobilknoten zu eigenen Heimagent.

16. Mobilknoten nach einem der Ansprüche 13 bis 15, des Weiteren umfassend:
Übertragungsmittel zum Senden von Adressen von Kandidatenproxyheimagenten an den ausfindiggemachten dem Korrespondenzknoten zu eigenen Heimagent.

17. Mobilknoten nach einem der Ansprüche 13 bis 16, des Weiteren umfassend:
Übertragungsmittel zum Senden einer optimierten Umkehrtunnelungsanforderung an den ausfindiggemachten dem Korrespondenzknoten zu eigenen Heimagent.

18. Mobilknoten nach einem der Ansprüche 13 bis 17, des Weiteren umfassend:
Übertragungsmittel zum Senden von Testnachrichten an den dem Mobilknoten zu eigenen Heimagent und den ausfindiggemachten dem Korrespondenzknoten zu eigenen Heimagent zur Bestimmung von Wegabständen.

19. Mobilknoten nach einem der Ansprüche 13 bis 18, des Weiteren umfassend:
Übertragungsmittel zum Senden von Berichten über Abstandsinformation an den dem Mobilknoten zu eigenen Heimagent und den ausfindiggemachten dem Korrespondenzknoten zu eigenen Heimagent.

20. Mobilknoten nach einem der Ansprüche 13 bis 19, des Weiteren umfassend:
Routingmittel zum Routen von Datenpaketen zu einem Korrespondenzmobilknoten über einen ersten Datentunnel (201, 301) von dem Mobilknoten zu dem dem Mobilknoten zu eigenen Heimagent und über einen zweiten Datentunnel (202, 302) von dem
dem Mobilknoten zu eigenen Heimagent zu dem Korrespondenzmobilknoten ohne Durchgang bei einem jeweiligen anderen Heimagent.

21. Mobilknoten nach einem der Ansprüche 13 bis 20, wobei Datenpakete von dem Korrespondenzmobilknoten (102) an den Mobilknoten (101) über einen dritten Datentunnel (203) von dem Korrespondenzmobilknoten an den Heimagent (104) des Korrespondenzmobilknotens und über einen vierten Datentunnel (204) von dem Heimagent des Korrespondenzmobilknotens an den Mobilknoten ohne Durchgang bei dem Heimagent (103) des Mobilknotens geroutet werden.

22. Mobilknoten nach einem der Ansprüche 13 bis 21, wobei der erste Heimagent der Heimagent (103) des Mobilknotens (101) ist, die ersten (301) und zweiten (302) Datentunnel bidirektionale Tunnel sind, und
wobei Datenpakete über den zweiten Datentunnel und den ersten Datentunnel von dem Korrespondenzmobilknoten (102) zu dem Mobilknoten (101) geroutet werden.

23. Mobilknoten nach einem der Ansprüche 13 bis 22, des Weiteren umfassend Empfangsmittel zum Empfangen einer Nachricht zum:
Bestimmen (812) von Abständen von dem Heimagent (103) des Mobilknotens zu dem Mobilknoten (101) und zu dem Korrespondenzmobilknoten (102); und
Bestimmen (813) von Abständen von dem Heimagent (104) des Korrespondenzmobilknotens zu dem Mobilknoten (101) und dem Korrespondenzmobilknoten (102).

24. Mobilknoten nach einem der Ansprüche 13 bis 23, wobei eine Tunnelaufbauanforderung oder Benachrichtigungsnachricht (1001) von dem Heimagent des Mobilknotens an den Mobilknoten gesendet wird.

25. Mobilknoten nach einem der Ansprüche 13 bis 24, wobei eine Nachricht von dem Heimagent (103) des Mobilknotens an den Heimagent (104) des Korrespondenzmobilknotens gesendet wird, wobei die Nachricht Heimadressen des Mobilknotens und des Korrespondenzmobilknotens umfasst;
wobei der Mobilknoten Empfangsmittel umfasst zum Empfangen einer signierten Antwort (807) von dem Heimagent (104) des Korrespondenzmobilknotens, wobei die Antwort eine zertifizierte Kennung und ein Autorisierungszertifikat des Heimagent des Korrespondenzmobilknotens umfasst;
wobei eine Sicherheitsverknüpfung (810) zwischen dem Mobilknoten und dem Heimagent des Korrespondenzmobilknotens aufgebaut wird; und
wobei der Mobilknoten Übertragungsmittel umfasst zum Senden von Verknüpfungsaktualisierungsinformation (811), die eine Care-of-Adresse und Heimadresse des Mobilknotens umfasst, an den Heimagent des Korrespondenzmobilknotens, Verwenden der Sicherheitsverknüpfung und Speichern der Verknüpfungsaktualisierungsinformation in dem Heimagent des Korrespondenzmobilknotens.

26. Mobilknoten nach einem der Ansprüche 13 bis 25, wobei eine Rücklaufroutbarkeitsprozedur (903) zwischen dem Mobilknoten (101) und dem Heimagent (104) des Korrespondenzmobilknotens ausgeführt wird.

27. Mobilknoten nach einem der Ansprüche 13 bis 26, des Weiteren umfassend:
Mittel zum Errichten eines bidirektionalen Datentunnels zu einem Proxyheimagent in dem besuchten Netzwerk des Mobilknotens, weiter zu einem Proxyheimagent in dem besuchten Netzwerk des Korrespondenzmobilknotens und weiter zu dem Korrespondenzmobilknoten ohne Durchgang bei irgendeinem der Heimagenten des Mobilknotens und Korrespondenzmobilknotens, wobei wenigstens einer der Proxyheimagenten kein Zugriffsrouter ist;
Mittel zum Errichten eines bidirektionalen Datentunnels zu einem Proxyheimagent in dem besuchten Netzwerk entweder des Mobilknotens oder des Korrespondenzmobilknotens und weiter zu dem Korrespondenzmobilknoten ohne Durchgang bei irgendeinem der Heimagenten des Mobilknotens und Korrespondenzmobilknotens; und
Mittel zum Errichten eines bidirektionalen Datentunnels zu einem Proxyheimagent in einem Netzwerk mit Anordnung zwischen dem besuchten Netzwerk des Mobilknotens und dem besuchten Netzwerk des Korrespondenzmobilknotens und weiter zu dem Korrespondenzmobilknoten ohne Durchgang bei irgendeinem der Heimagenten des Mobilknotens und Korrespondenzmobilknotens; und
Auswahlmittel zum Auswählen (813) zwischen wenigstens zwei der Routingoptionen gemäß vorstehender Beschreibung.

28. Einem Korrespondenzknoten zu eigener Heimagent in einem Mobilkommunikationssystem zur paketgeschalteten Datenübertragung zwischen einem mehrfachvernetzten Mobilknoten und einem Korrespondenzknoten, wobei der dem Korrespondenzknoten zu eigenen Heimagent umfasst:
Übertragungsmittel zum Senden einer Anforderungsnachricht an den Korrespondenzknoten zum Anfordern des Einrichtens einer optimierten Route mit dem Mobilknoten,
wobei die Anforderungsnachricht wenigstens die dem Mobilknoten zu eigene Heimadresse und die dem Korrespondenzknoten zu eigene Heimadresse enthält;
Empfangsmittel zum Empfangen von Proxykandidatenheimagentenadressen;
Speichermittel zum Speichern von Proxykandidatenheimagentenadressen;
Auswahlmittel zum Auswählen wenigstens einer von den Proxyheimagentenadressen, einer von einem Mobilknoten zu eigenen Care-of-Adressen und einer von einem Korrespondenzknoten zu eigenen Care-of-Adressen; und
Anregungsmittel zum Anregen des Korrespondenzknotens zum Schalten eines Tunnels derart, dass zwei Endpunkte des Tunnels eine von den ausgewählten Proxyheimagentenadressen und den dem Korrespondenzknoten zu eigenen Care-of-Adressen sind.

29. Korrespondenzknoten in einem Mobilkommunikationssystem zur paketgeschalteten Datenübertragung zwischen einem mehrfachvernetzten Mobilknoten und einem Korrespondenzknoten, wobei der Korrespondenzknoten umfasst:
Speichermittel zum Registrieren von wenigstens einer aus einer Mehrzahl von Adressen mit Zuweisung an eine betrachtete Netzwerkschnittstelle als Care-of-Adresse bei dem dem Korrespondenzknoten zu eigenen Heimagent.

30. Einem Mobilknoten zu eigener Heimagent in einem Mobilkommunikationssystem zur paketgeschalteten Datenübertragung zwischen einem mehrfachvernetzten Mobilknoten und einem Korrespondenzknoten, wobei der dem Mobilknoten zu eigene Heimagent umfasst:
Auswahlmittel zum Auswählen von wenigstens einer von Proxyheimagentenadressen, einer von einem Mobilknoten zu eigenen Care-of-Adressen und einer von einem Korrespondenzknoten zu eigenen Care-of-Adressen; und
Anregungsmittel zum Anregen des Mobilknotens zum Schalten eines Tunnels derart, dass zwei Endpunkte des Tunnels eine von den ausgewählten Proxyheimagentenadressen und den dem Korrespondenzknoten zu eigenen Care-of-Adressen sind.

31. Mobilkommunikationssystem zur paketgeschalteten Datenübertragung zwischen einem mehrfachvernetzten Mobilknoten und einem Korrespondenzknoten, wobei das Mobilkommunikationssystem den Mobilknoten nach Anspruch 13, den Korrespondenzknoten nach Anspruch 29, den dem Korrespondenzknoten zu eigenen Heimagent nach Anspruch 28 und den dem Mobilknoten zu eigenen Heimagent nach Anspruch 30 umfasst.

32. Mobilkommunikationssystem nach Anspruch 31 zum Ausführen des Verfahrens nach Ansprüchen 2 bis 12.

33. Computerlesbares Medium zum Speichern von Anweisungen, die bei Ausführung durch einen Prozessor eines Mobilknotens veranlassen, dass sich der Mobilknoten an einer optimierten Umkehrtunnelung für mehrfachvernetzte Endgeräte beteiligt, durch:
Auswählen von einer von seinen Heimadressen zur Verwendung für eine Kommunikation mit dem Korrespondenzknoten;
Registrieren von wenigstens einer aus einer Mehrzahl von Adressen mit Zuweisung an eine betrachtete Netzwerkschnittstelle als dem Mobilknoten zu eigene jeweilige Care-of-Adressen bei einem dem Mobilknoten zu eigenen Heimagent, der für die ausgewählte Heimadresse verantwortlich ist; und
Senden von Adressen von Kandidatenproxyheimagenten mit Speicherung an dem Mobilknoten an einen dem Mobilknoten zu eigenen Heimagent und an einen dem Korrespondenzknoten zu eigenen Heimagent; und
Empfangen einer Anregung von dem dem Mobilknoten zu eigenen Heimagent zum Schalten eines Tunnels, wobei zwei Endpunkte des Tunnels eine von vorher ausgewählten Proxyheimagentenadressen und einer vorher ausgewählten dem Mobilknoten zu eigenen Care-of-Adresse sind, und entsprechendes Schalten des Datentunnels durch den Mobilknoten;
Senden einer optimierten Umkehrtunnelungsinitüerungsanforderung an den dem Mobilknoten zu eigenen Heimagent mit Adressen von Kandidatenproxyheimagenten; und
Auswählen einer Heimadresse des Korrespondenzknotens; und Auffinden eines dem Korrespondenzknoten zu eigenen Heimagent zum Verwalten der Verknüpfung für die Heimadresse des Korrespondenzknotens gemäß Auswahl durch den Mobilknoten.

34. Computerlesbares Medium zum Speichern von Anweisungen, die bei Ausführung durch einen Prozessor eines einem Korrespondenzknoten zu eigenen Heimagent veranlassen, dass sich der dem Korrespondenzkonten zu eigene Heimagent bei einer optimierten Umkehrtunnelung für mehrfachvernetzte Endgeräte beteiligt, durch:
Senden einer Nachrichtenanforderung an den Korrespondenzknoten zum Anfordern des Schrittes einer optimierten Route mit dem Mobilknoten, wobei die Anforderungsnachricht wenigstens die dem Mobilknoten zu eigene Heimadresse enthält;
Empfangen von Proxykandidatenheimagentenadressen;
Speichern von Proxykandidatenheimagentenadressen;
Auswählen von wenigstens einer der Proxyheimagentenadressen, einer der einem Mobilknoten zu eigenen Care-of-Adressen und einer einem Korrespondenzknoten zu eigenen Care-of-Adressen; und
Anregen des Korrespondenzknotens zum Schalten eines Tunnels derart, dass zwei Endpunkte des Tunnels eine von den ausgewählten Proxyheimagentenadressen und dem Korrespondenzknoten zu eigenen Care-of-Adressen sind.

## Revendications

1. Procédé de transmission de données à commutation de paquets entre un noeud mobile à hébergements multiples et un noeud correspondant dans un système de communication mobile comprenant une pluralité de réseaux mobiles, le procédé comprenant les étapes consistant à :
a) sélectionner (1902) par le noeud mobile une de ses adresses principales et l'agent local correspondant à utiliser pour une communication vers le noeud correspondant ;
b) enregistrer (1910) par le noeud mobile au moins une adresse d'une pluralité d'adresses attribuées à une interface de réseau considérée, en tant qu'adresses temporaires respectives du noeud mobile, au niveau d'un agent local du noeud mobile responsable de l'adresse principale sélectionnée, et mapper l'adresse principale sélectionnée aux adresses temporaires respectives du noeud mobile par l'agent local ;
i) envoyer par le noeud mobile les adresses d'agents locaux de serveurs de proximité candidats stockées au niveau du noeud mobile à un agent local du noeud mobile et par le noeud mobile à un agent local du noeud correspondant ou par l'agent local du noeud mobile à un agent local du noeud correspondant ;
c) recevoir et stocker par un agent local du noeud correspondant et par l'agent local du noeud mobile les adresses d'agents locaux de serveurs de proximité candidats ;
d) envoyer (1932) par l'agent local du noeud correspondant un message de demande au noeud correspondant pour demander l'établissement d'une route optimisée vers le noeud mobile, le message de demande contenant au moins les adresses principales du noeud mobile et du noeud correspondant ;
e) enregistrer (1934) par le noeud correspondant au moins une adresse d'une pluralité d'adresses attribuées à une interface de réseau considérée, en tant qu'adresse temporaire du noeud correspondant, pour l'adresse principale du noeud correspondant contenue dans le message de demande au niveau de l'agent local du noeud correspondant ;
j) envoyer par le noeud correspondant les adresses d'agents locaux de serveurs de proximité candidats stockées au niveau du noeud correspondant à un agent local du noeud correspondant et par le noeud correspondant à un agent local du noeud mobile ou par l'agent local du noeud correspondant à l'agent local du noeud mobile ;
f) sélectionner (1946) la même au moins une des adresses d'agents locaux de serveurs de proximité candidats, une des adresses temporaires du noeud mobile et une des adresses temporaires du noeud correspondant à l'agent local du noeud mobile et à l'agent local du noeud correspondant ;
g) déclencher (1958) le noeud mobile par l'agent local du noeud mobile pour commuter un tunnel, deux points d'extrémités du tunnel étant une des adresses d'agents locaux de serveurs de proximité sélectionnées et des adresses temporaires du noeud mobile sélectionnées, telles qu'elles ont été sélectionnées à l'étape f) ; et
h) déclencher (1958) le noeud correspondant par l'agent local du noeud correspondant pour commuter un tunnel, deux points d'extrémités du tunnel étant une des adresses d'agents locaux de serveurs de proximité sélectionnées et des adresses temporaires du noeud correspondant, telles qu'elles ont été sélectionnées à l'étape f).

2. Procédé selon la revendication 1, pour lequel le message de demande de l'étape d) est une demande de lancement d'une tunnellisation inverse optimisée.

3. Procédé selon la revendication 1, pour lequel l'étape i) comprend les étapes consistant à :
- envoyer (1912) par le noeud mobile à son agent local une demande de lancement d'une tunnellisation inverse optimisée ;
- recevoir (1920) par l'agent local du noeud mobile la demande de lancement d'une tunnellisation inverse optimisée et stocker les adresses des agents locaux du serveur de proximité candidat ;
- trouver (1924, 1926, 1928) par l'agent local du noeud mobile un agent local qui gère les liaisons pour une adresse principale du noeud correspondant ; et
- envoyer (1930) une demande de tunnellisation inverse optimisée par l'agent local du noeud mobile à l'agent local du noeud correspondant trouvé.

4. Procédé selon la revendication 1, pour lequel l'étape j) comprend les étapes consistant à :
- envoyer (1912) par le noeud correspondant à son agent local une réponse de lancement d'une tunnellisation inverse optimisée ;
- recevoir (1920) par l'agent local du noeud correspondant la réponse de lancement d'une tunnellisation inverse optimisée et stocker les adresses des agents locaux du serveur de proximité candidat ; et
- envoyer (1930) une réponse de tunnellisation inverse optimisée par l'agent local du noeud correspondant à l'agent local du noeud mobile.

5. Procédé selon la revendication 1, pour lequel l'étape i) comprend les étapes consistant à :
- envoyer (1912) par le noeud mobile à son agent local les adresses des agents locaux du serveur de proximité candidat ;
- recevoir (1920) et stocker par l'agent local du noeud mobile les adresses des agents locaux du serveur de proximité candidat ;
- trouver (1924, 1926, 1928) par le noeud mobile un agent local qui gère les liaisons pour une adresse principale du noeud correspondant ; et
- envoyer (1930) une demande de tunnellisation inverse optimisée par le noeud mobile à l'agent local du noeud correspondant trouvé.

6. Procédé selon la revendication 1, pour lequel l'étape j) comprend les étapes consistant à :
- envoyer (1912) par le noeud correspondant à son agent local les adresses des agents locaux du serveur de proximité candidat ;
- recevoir (1920) et stocker par l'agent local du noeud correspondant les adresses des agents locaux du serveur de proximité candidat ;
- trouver (1924, 1926, 1928) par le noeud correspondant un agent local qui gère les liaisons pour une adresse principale du noeud mobile ; et
- envoyer (1930) une réponse de tunnellisation inverse optimisée par le noeud correspondant à l'agent local du noeud mobile.

7. Procédé selon l'une quelconque des revendications 3 à 6, pour lequel l'étape consistant à envoyer une demande ou une réponse de tunnellisation optimisée est suivie d'une étape consistant à proposer des adresses des agents locaux du serveur de proximité candidat à l'agent local respectif.

8. Procédé selon l'une quelconque des revendications 1 à 7, pour lequel l'étape f) est exécutée pour sélectionner un trajet le plus court.

9. Procédé selon l'une quelconque des revendications 1 à 7, pour lequel l'étape f) est exécutée pour sélectionner un trajet avec un retard le plus court.

10. Procédé selon l'une quelconque des revendications 1 à 9, comprenant en outre, avant l'étape d), l'étape consistant à :
- sélectionner (1908) par le noeud mobile une des adresses principales du noeud correspondant en tant qu'adresse de destination.

11. Procédé selon l'une quelconque des revendications 1 à 10, comprenant en outre l'étape consistant à :
- rejeter les agents locaux non fiables du serveur de proximité par l'agent local du noeud mobile.

12. Procédé selon l'une quelconque des revendications 1 à 11, comprenant en outre l'étape consistant à :
- rejeter les agents locaux non fiables du serveur de proximité par l'agent local du noeud correspondant.

13. Noeud mobile d'un système de communication mobile pour une transmission de données à commutation de paquets entre un noeud mobile à hébergements multiples et un noeud correspondant, le noeud mobile comprenant :
- des moyens de sélection adaptés à sélectionner une de ses adresses principales à utiliser pour une communication avec le noeud correspondant ;
- des moyens de transmission adaptés à enregistrer au moins une adresse d'une pluralité d'adresses attribuées à une interface de réseau considérée, en tant qu'adresses temporaires respectives du noeud mobile, au niveau d'un agent local du noeud mobile responsable de l'adresse principale sélectionnée ;
- des moyens de transmission adaptés à envoyer les adresses d'agents locaux de serveurs de proximité candidats stockées au niveau du noeud mobile à un agent local du noeud mobile et à un agent local du noeud correspondant ;
- des moyens de réception adaptés à recevoir un déclenchement en provenance de l'agent local du noeud mobile pour commuter un tunnel, deux points d'extrémités du tunnel étant une des adresses d'agents locaux de serveurs de proximité sélectionnées au préalable et une adresse temporaire du noeud mobile sélectionnée au préalable, et des moyens adaptés à commuter le tunnel de données par le noeud mobile en conséquence ;
- des moyens de transmission adaptés à envoyer une demande de lancement d'une tunnellisation inverse optimisée à l'agent local du noeud mobile contenant les adresses des agents locaux du serveur de proximité candidat ;
- des moyens pour sélectionner une adresse principale du noeud correspondant ; et
- des moyens pour découvrir un agent local du noeud correspondant gérant la liaison pour l'adresse principale du noeud correspondant sélectionnée par le noeud mobile.

14. Noeud mobile selon la revendication 13, comprenant en outre :
- des moyens de transmission adaptés à envoyer une réponse de lancement d'une tunnellisation inverse optimisée à l'agent local du noeud mobile contenant les adresses des agents locaux du serveur de proximité candidat.

15. Noeud mobile selon la revendication 13 ou 14, comprenant en outre :
- des moyens de transmission adaptés à envoyer les adresses des agents locaux du serveur de proximité candidat à l'agent local du noeud mobile.

16. Noeud mobile selon l'une quelconque des revendications 13 à 15, comprenant en outre :
- des moyens de transmission adaptés à envoyer les adresses des agents locaux du serveur de proximité candidat à l'agent local du noeud correspondant trouvé.

17. Noeud mobile selon l'une quelconque des revendications 13 à 16, comprenant en outre :
- des moyens de transmission adaptés à envoyer une demande de tunnellisation inverse optimisée à l'agent local du noeud correspondant trouvé.

18. Noeud mobile selon l'une quelconque des revendications 13 à 17, comprenant en outre:
- des moyens de transmission adaptés à envoyer des messages d'essai à l'agent local du noeud mobile et à l'agent local du noeud correspondant trouvé pour déterminer les distances des trajets.

19. Noeud mobile selon l'une quelconque des revendications 13 à 18, comprenant en outre :
- des moyens de transmission adaptés à envoyer des rapports d'informations de distance à l'agent local du noeud mobile et à l'agent local du noeud correspondant trouvé.

20. Noeud mobile selon l'une quelconque des revendications 13 à 19, comprenant en outre :
- des moyens de routage adaptés à router des paquets de données à un noeud mobile correspondant, par un premier tunnel de données (201, 301) du noeud mobile à l'agent local du noeud mobile et par un deuxième tunnel de données (202, 302) de l'agent local du noeud mobile au noeud mobile correspondant sans passer par un autre agent local respectif.

21. Noeud mobile selon l'une quelconque des revendications 13 à 20, dans lequel des paquets de données sont routés du noeud mobile correspondant (102) au noeud mobile (101) par un troisième tunnel de données (203) du noeud mobile correspondant à l'agent local (104) du noeud mobile correspondant et par un quatrième tunnel de données (204) de l'agent local du noeud mobile correspondant au noeud mobile sans passer par l'agent local (103) du noeud mobile.

22. Noeud mobile selon l'une quelconque des revendications 13 à 21, dans lequel le premier agent local est l'agent local (103) du noeud mobile (101), le premier (301) et le deuxième (302) tunnels de données sont des tunnels bidirectionnels, et
- dans lequel les paquets de données sont routés par le deuxième tunnel de données et le premier tunnel de données du noeud mobile correspondant (102) au noeud mobile (101).

23. Noeud mobile selon l'une quelconque des revendications 13 à 22, comprenant en outre des moyens de réception adaptés à recevoir un message pour :
- déterminer (812) les distances entre l'agent local (103) du noeud mobile et le noeud mobile (101) et le noeud mobile correspondant (102) ; et
- déterminer (813) les distances entre l'agent local (104) du noeud mobile correspondant et le noeud mobile (101) et le noeud mobile correspondant (102).

24. Noeud mobile selon l'une quelconque des revendications 13 à 23, dans lequel une demande d'établissement de tunnel ou un message de notification (1001) est envoyé de l'agent local du noeud mobile au noeud mobile.

25. Noeud mobile selon l'une quelconque des revendications 13 à 24, dans lequel un message est envoyé de l'agent local (103) du noeud mobile à l'agent local (104) du noeud mobile correspondant, le message comprenant les adresses principales du noeud mobile et du noeud mobile correspondant ;
- le noeud mobile comprend des moyens de réception adaptés à recevoir une réponse signée (807) de l'agent local (104) du noeud mobile correspondant, la réponse comprenant un identificateur certifié et un certificat d'autorisation de l'agent local du noeud mobile correspondant ;
- dans lequel une association de sécurité (810) est établie entre le noeud mobile et l'agent local du noeud mobile correspondant ; et
- le noeud mobile comprend des moyens de transmission adaptés à envoyer des informations de mise à jour de liaison (811), comprenant l'adresse temporaire et l'adresse principale du noeud mobile, à l'agent local du noeud mobile correspondant, utiliser ladite association de sécurité et stocker les informations de mise à jour de liaison dans l'agent local du noeud mobile correspondant.

26. Noeud mobile selon l'une quelconque des revendications 13 à 25, dans lequel une procédure de routabilité de retour (903) est exécutée entre le noeud mobile (101) et l'agent local (104) du noeud mobile correspondant.

27. Noeud mobile selon l'une quelconque des revendications 13 à 26, comprenant en outre :
- des moyens adaptés à établir un tunnel de données bidirectionnel vers un agent local de serveur de proximité dans le réseau visité du noeud mobile, vers un agent local de serveur de proximité dans le réseau visité du noeud mobile correspondant et vers le noeud mobile correspondant sans passer par un quelconque agent parmi les agents locaux du noeud mobile et du noeud mobile correspondant, dans lequel au moins un des agents locaux de serveur de proximité n'est pas un routeur d'accès ;
- des moyens adaptés à établir un tunnel de données bidirectionnel vers un agent local de serveur de proximité dans le réseau visité, soit du noeud mobile, soit du noeud mobile correspondant, et vers le noeud mobile correspondant sans passer par un quelconque agent parmi les agents locaux du noeud mobile et du noeud mobile correspondant ;
- des moyens adaptés à établir un tunnel de données bidirectionnel vers un agent local de serveur de proximité dans un réseau situé entre le réseau visité du noeud mobile et le réseau visité du noeud mobile correspondant et vers le noeud mobile correspondant sans passer par un quelconque agent parmi les agents locaux du noeud mobile et du noeud mobile correspondant ; et
- des moyens de sélection adaptés à effectuer une sélection (816) entre au moins deux des options de routage décrites plus haut.

28. Agent local d'un noeud correspondant dans un système de communication mobile pour la transmission de données à commutation de paquets entre un noeud mobile à hébergements multiples et un noeud correspondant, l'agent local du noeud correspondant comprenant :
- des moyens de transmission adaptés à envoyer un message de demande au noeud correspondant pour demander l'établissement d'une route optimisée vers le noeud mobile, le message de demande contenant au moins l'adresse principale du noeud mobile et l'adresse principale du noeud correspondant ;
- des moyens de réception adaptés à recevoir les adresses d'agents locaux candidats de serveurs de proximité ;
- des moyens de stockage adaptés à stocker les adresses d'agents locaux candidats de serveurs de proximité ;
- des moyens de sélection adaptés à sélectionner au moins une des adresses d'agents locaux de serveurs de proximité, une des adresses temporaires du noeud mobile et une des adresses temporaires du noeud correspondant ; et
- des moyens de déclenchement adaptés à déclencher le noeud correspondant pour commuter un tunnel, de sorte que deux points d'extrémités du tunnel soient une des adresses d'agents locaux de serveurs de proximité sélectionnées et des adresses temporaires du noeud correspondant.

29. Noeud correspondant dans un système de communication mobile pour la transmission de données à commutation de paquets entre un noeud mobile à hébergements multiples et un noeud correspondant, le noeud correspondant comprenant :
- des moyens de stockage adaptés à enregistrer au moins une adresse d'une pluralité d'adresses attribuées à une interface de réseau considérée, en tant qu'adresse temporaire, au niveau de l'agent local du noeud correspondant.

30. Agent local d'un noeud mobile dans un système de communication mobile pour la transmission de données à commutation de paquets entre un noeud mobile à hébergements multiples et un noeud correspondant, l'agent local du noeud mobile comprenant :
- des moyens de sélection adaptés à sélectionner au moins une des adresses d'agents locaux de serveurs de proximité, une des adresses temporaires du noeud mobile et une des adresses temporaires du noeud correspondant ; et
- des moyens de déclenchement adaptés à déclencher le noeud mobile pour commuter un tunnel, de sorte que deux points d'extrémités du tunnel soient une des adresses d'agents locaux de serveurs de proximité sélectionnées et des adresses temporaires du noeud correspondant.

31. Système de communication mobile pour la transmission de données à commutation de paquets entre un noeud mobile à hébergements multiples et un noeud correspondant, le système de communication mobile comprenant le noeud mobile selon la revendication 13, le noeud correspondant selon la revendication 29, l'agent local de noeud correspondant selon la revendication 28 et l'agent local de noeud mobile selon la revendication 30.

32. Système de communication mobile selon la revendication 31, adapté à mettre en oeuvre le procédé selon les revendications 2 à 12.

33. Support lisible par un ordinateur stockant des instructions qui, lorsqu'elles sont exécutées par un processeur d'un noeud mobile, font en sorte que le noeud mobile entreprenne une tunnellisation inverse optimisée pour des terminaux à hébergements multiples, en :
- sélectionnant une de ses adresses principales à utiliser pour une communication avec le noeud correspondant ;
- enregistrant au moins une adresse d'une pluralité d'adresses attribuées à une interface de réseau considérée, en tant qu'adresses temporaires respectives du noeud mobile, au niveau d'un agent local du noeud mobile responsable de l'adresse principale sélectionnée ;
- envoyant les adresses d'agents locaux de serveurs de proximité candidats stockées au niveau du noeud mobile à un agent local du noeud mobile et à un agent local du noeud correspondant ;
- recevant un déclenchement en provenance de l'agent local du noeud mobile pour commuter un tunnel, deux points d'extrémités du tunnel étant une des adresses d'agents locaux de serveurs de proximité sélectionnées au préalable et une adresse temporaire du noeud mobile sélectionnée au préalable, et en commutant le tunnel de données par le noeud mobile en conséquence ;
- envoyant une demande de lancement d'une tunnellisation inverse optimisée à l'agent local du noeud mobile contenant les adresses des agents locaux du serveur de proximité candidat ; et
- sélectionnant une adresse principale du noeud correspondant ; et en découvrant un agent local du noeud correspondant gérant la liaison pour l'adresse principale du noeud correspondant sélectionnée par le noeud mobile.

34. Support lisible par un ordinateur stockant des instructions qui, lorsqu'elles sont exécutées par un processeur d'un agent local d'un noeud correspondant, font en sorte que l'agent local du noeud correspondant entreprenne une tunnellisation inverse optimisée pour des terminaux à hébergements multiples, en :
- envoyant un message de demande au noeud correspondant pour demander l'établissement d'une route optimisée vers le noeud mobile, le message de demande contenant au moins les adresses principales du noeud mobile ;
- recevant les adresses d'agents locaux de serveurs de proximité candidats ;
- stockant les adresses d'agents locaux de serveurs de proximité candidats ;
- sélectionnant au moins une des adresses d'agents locaux de serveurs de proximité, une des adresses temporaires du noeud mobile et une des adresses temporaires du noeud correspondant ; et
- déclenchant le noeud correspondant pour commuter un tunnel, de sorte que deux points d'extrémités du tunnel soient une des adresses d'agents locaux de serveurs de proximité sélectionnées et des adresses temporaires du noeud correspondant.
